# EUROPEAN PATENT APPLICATION

(11) **EP 0 984 589 A1**
(43) Date of publication of application: **08.03.2000**
(21) Application number: 99909312.3
(22) Date of filing: 23.03.1999
(51) Int. Cl.: H04L 12/28

(54) **COMMUNICATION SYSTEM, SWITCH, SOFTWARE PROCESSOR, AND METHOD OF COMMUNICATION**

(30) Priority: 20.03.1998 JP 7190298
(71) Applicant: Sony Corporation, Tokyo 141-0001 (JP)
(72) Inventor: KUNITO, Yoshiyuki, Sony Corp., Tokyo 141-0001 (JP); GIOR, Kevin, Sony Corp., Tokyo 141-0001 (JP); ITAKURA, Eisaburo, Sony Corp., Tokyo 141-0001 (JP)
(74) Representative: DeVile, Jonathan Mark
(86) International application number: JP9901454
(87) International publication number: WO9949619

(57) **Abstract**

In an ATM network system, a proxy control server 31 is connected an exchange 21. The proxy control server 31 registers a call-setting request and an address, in place of the exchange 21, in response to a request made by any communication terminal 11.

## Description

### Technical Field

The present invention relates to a communication system, a switch apparatus, a software-processing apparatus, and a communication method, all for use in data communication networks and the like.

### Background Art

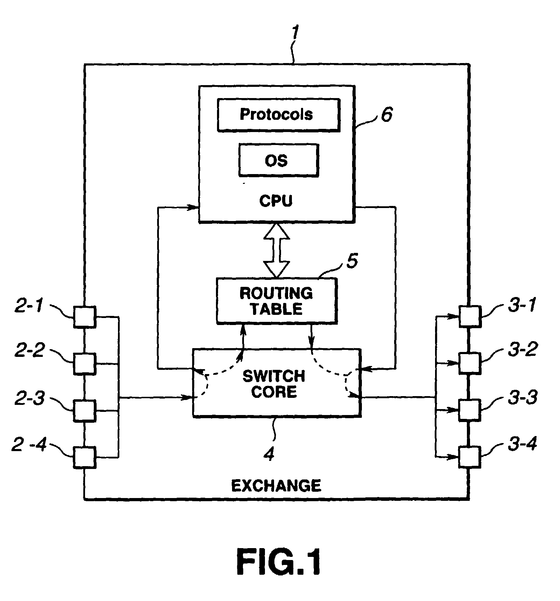

FIG. 1 shows the structure of an ATM exchange 1 (hereinafter, referred to as "exchange" for short) for use in the conventional ATM communication. The exchange 1 has input terminals 2-1 to 2-4 and output terminals 3-1 to 3-4, each input terminal being paired with one output terminal. A switch core can be switched to connect any one of the input terminals 2-1 to 2-4 to any one of the output terminals 3-1 to 3-4. A routing table 5 stores the route, which the switch core 4 is to change over. A CPU 6 controls the switch core 4 in accordance with a predetermined operating system (OS) and a prescribed protocol.

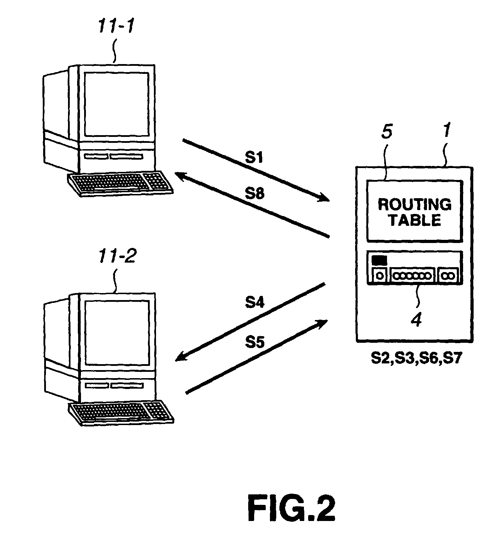

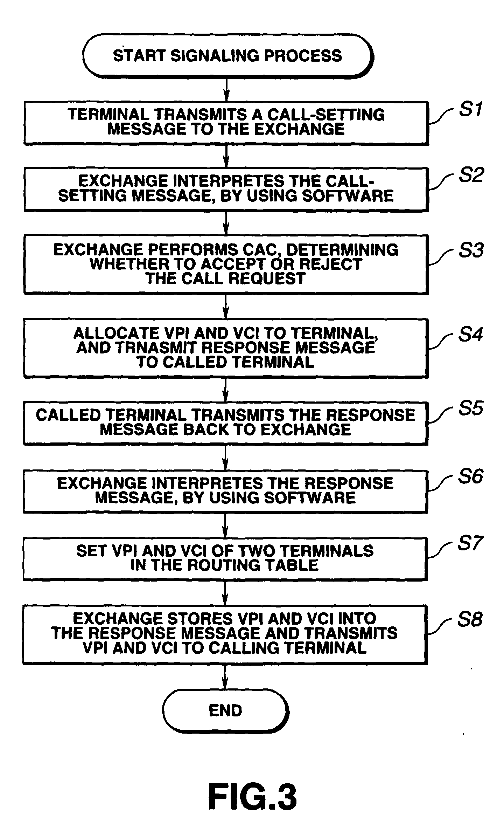

Assume that terminals 11-1 and 11-2, such as personal computers, are connected to the exchange 1 as is illustrated in FIG. 2. How to achieve ATM communication in this condition between the terminals 11-1 and 11-2 will be described, with reference to the flow chart of FIG. 3.

First, the terminal 11-1 transmits a call-setting message to the exchange 1 in Step S1. The call-setting message is one defined as an ATM signaling in Q. 2931 and ATM FORUM UNI3.0, 3.1, 4.0, and the like. The call-setting message is transmitted, usually through the leased channel (VPI, VCI) = (0,5). "VPI" stands for "Virtual Path Identifier," and "VCI" for "Virtual Channel Identifier." The leased channel is described as an ATM routing field in the header of the ATM cell. That is, the VPI designates the virtual path to be used, whereas VCI designates the virtual channel to be used.

Upon receipt of the call-setting message from the terminal 11-1, the CPU 6 of the exchange 1 interprets the message in Step 2, by using the call control software that operates as an application on the OS. In Step S3, the exchange 1 performs CAC (Call Admission Control) and determines whether it should accept or reject the call request. The CPU 6 rejects the call request if other terminals are using all paths and all channels, making it impossible to occupy a path or a channel. The CPU 6 accepts the call request if predetermined path and channel can be occupied.

To accept the request from the terminal 11-1, the CPU 6 allocates, in Step S4, the VPI and VCI for transmitting data from the terminal 11-1 to the terminal 11-2 and also the VPI and VCI for transmitting data from the terminal 11-2 to the terminal 11-1. The CPU 6 stores the VPI and VCI to be used to transmit data from the terminal 11-2 to the terminal 11-1, into the call-setting message. The call-setting message is transmitted to the terminal 11-2 that has been called. Upon receipt of the call-setting message, the terminal 11-2 rejects the message if it cannot respond to the call made by the terminal 11-1 because it is communicating with another terminal, or for any other reason. If the terminal 11-2 can respond to the call, it transmits a response message to the exchange 1 in Step S5. Upon receipt of the response message, the CPU 6 of the exchange 1 interprets the message by using the call control software.

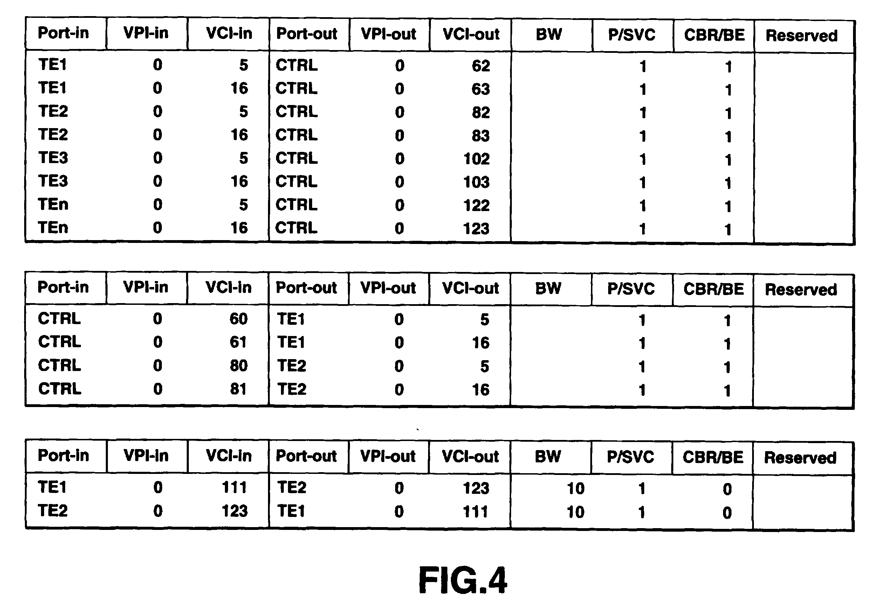

In Step S7, the CPU 6 sets the VPI and VCI for transmitting data from the terminal 11-1 to the terminal 11-2 and also the VPI and VCI for transmitting data from the terminal 11-2 to the terminal 11-1, in the routing table 5. FIG. 4 shows the contents of the routing table 5 thus set. Then, in Step S8, the CPU 6 stores the VPI and VCI for transmitting data from the terminal 11-1 to the terminal 11-2, which have been set in Step S7, into the response message, and transmits the VPI and VCI to the terminal 11-1.

Thereafter, the terminals 11-1 and the terminal 11-2 can receive data from each other, by using the VPI and VCI allocated to them in Step S7.

Call control signals must be processed by means of software. This is because the data elements of each call control signal, such as traffic, AAL (ATM Adaptation Layer), QOS (Quality of Service) and the like, are variable, and the function of the signal is always expanded. Hence, a protocol like this is prepared, usually on the assumption that a memory location and a timer are used. In practice, a real-time OS is often applied. If a real-time OS is used, the CPU 6 should be a high-performance one like 32-bit RISC CPU, and much hardware resource such as a boot RAM and a DRAM should be provided as peripheral equipment for the CPU 6.

ATM communication is accomplished by the use of the exchange 1. When the exchange 1 transmits a call-setting message to the terminal 11-2, the terminal 11-2 may fail to respond to the message for some reason. In this case, any other terminal can be made to respond to the message, as is disclosed in Laid-Open Publication No. 9-130393.

However, if a high-performance CPU is used as CPU 6, not only the structure of the exchange 1 will become complex, but also the manufacturing cost thereof will increase. To provide a small and inexpensive exchange, the main body of the exchange can indeed be made smaller by using LSI components. However, the CPU and the hardware peripheral to the CPU are just as large and expensive as the main body of the exchange. This is one of the reasons why it is hard to provide a low-price, small exchange.

In view of its utilization rate, the CPU need not be operated all the time, though it must keep operating during the signaling period. The CPU is used only when calls are set and released. Thus, the CPU is almost idling. Its low utilization rate is a problem.

In the case where a plurality of exchanges are provided on a network, it suffices to use one communication apparatus that has a signaling function. If each exchange has a signaling function, the network as a whole will not only have component redundancy, but also involve in high manufacturing cost.

### Disclosure of the Invention

The present invention has been made in view of the foregoing. Its object is to provide a communication system that is small and inexpensive.

This invention has been made in view of the foregoing. Its object is to provide a switch apparatus that is small and inexpensive.

The invention has been made in view of the foregoing. Its object is to provide a software-processing apparatus, which has small and inexpensive switch apparatus.

This invention has been made in view of the foregoing. Its object is to provide a communication method that helps to render the switch apparatuses and the network small and inexpensive.

A communication system according to the present invention comprises a switch apparatus and a software-processing apparatus. In the communication system, data communication is performed between a plurality of information-processing apparatuses through the switch apparatus and the software-processing apparatus and the switch apparatus are connected to each other. The system is characterized in that the switch apparatus comprises: a plurality of input ports for inputting communication data from an external apparatus; a plurality of output ports for outputting the communication data to an external apparatus; storage means for storing route information representing an input/output route for the communication data; switching means for switching the input/output route in accordance with the route information stored in the storage means, thereby to output the communication data input from one of the plurality of input port, from one of the plurality of output ports; and setting means for selling the input/output route switched by the switching means for the communication data, by registering the software-processing apparatus connected to one of the plurality of input ports and one of the plurality of output ports, as a proxy software-processing apparatus, and by updating the route information stored in the storage means, in accordance with instruction information supplied from the software-processing apparatus registered. The system is characterized also in that the software-processing apparatus comprises: an input/output port connected to one of the plurality of input ports and one of the plurality of output ports, all provided in the switch apparatus; and control means for controlling the switch apparatus, by outputting, in place of the switch apparatus, instruction information to the switch apparatus through the input/output port, the instruction information being one for setting the input/output route to the switch apparatus to perform communication between the plurality of information-processing apparatuses connected to the switch apparatus, through the switch apparatus.

A switch apparatus according to this invention is characterized by comprising: a plurality of input ports for inputting communication data from an external apparatus; a plurality of output ports for outputting the communication data to an external apparatus; storage means for storing route information representing an input/output route for the communication data; switching means for switching the input/output route in accordance with the route information stored in the storage means, thereby to output the communication data input from one of the plurality of input port, from one of the plurality of output ports; and setting means for setting the input/output route switched by the switching means for the communication data, by registering the software-processing apparatus connected to one of the plurality of input ports and one of the plurality of output ports, as a proxy software-processing apparatus, and by updating the route information stored in the storage means, in accordance with instruction information supplied from the software-processing apparatus registered.

A software-processing apparatus according to this invention is characterized by comprising: an input/output port for inputting and outputting communication data to and from an external switch apparatus which comprises storage means for storing an input/output route and is connected to a plurality of information-processing apparatuses, for performing communication between the plurality of information-processing apparatuses in accordance with the input/output route; and control means for controlling the switch apparatus, by outputting, in place of the switch apparatus, instruction information to the switch apparatus through the input/output port, the instruction information being one for setting the input/output route in the switch apparatus to perform communication between the plurality of information-processing apparatuses connected to the external switch apparatus, through the external switch apparatus.

A communication method according to the present invention is one designed for use in a system comprising a switch apparatus having a plurality of input/output ports, a plurality of information-processing apparatuses connected to said plurality of input/output ports of the switch apparatus, and a software-processing apparatus connected one of said plurality of input/output ports. The method is characterized by comprising the steps of: registering said software-processing apparatus, as a proxy software-processing apparatus, in said switch apparatus; and setting first route information in said switch apparatus by means of said software-processing apparatus, said first route information is one for achieve communication between each of said information-processing apparatuses and said software-processing apparatus, through said switch apparatus.

### Brief Description of the Drawings

FIG. 1 is a diagram showing the structure of a conventional ATM exchange;
FIG. 2 is a diagram showing a conventional ATM network system;
FIG. 3 is a flow chart illustrating the operation of the conventional exchange;
FIG. 4 is a diagram depicting the routing table registered in the conventional exchange;
FIG. 5 is a diagram showing the structure of an ATM network system according to the present invention;
FIG. 6 is a diagram illustrating the internal structures of the exchange and the proxy signaling server, both incorporated in the ATM network system shown in FIG. 5;
FIG. 7 is a diagram depicting the structure of an ATM cell to be transferred by the transfer protocol used in the ATM network system according to this invention;
FIG. 8 is a diagram showing the structure of an ATM cell to be transferred by the PSS protocol utilized in the ATM network system according to this invention;
FIG. 9 is a table showing the instructions used in the PSS protocol;
FIG. 10 is a diagram illustrating the circuitry of the exchange that is incorporated in ATM network system shown in FIG. 5;
FIG. 11 is a flow chart showing the sequence of steps performed in the ATM network system according to the invention;
FIG. 12 is a diagram illustrating the paths through which information is transmitted to register the proxy server as shown in FIG. 11;
FIG. 13 is a flow chart explaining, in detail, the steps performed to register the proxy server as shown in FIG. 11;
FIG. 14 is a diagram showing the first table registered in the routing table as is illustrated in FIG. 13;
FIG. 15 is a diagram illustrating the paths through which information is transmitted to register the terminal addresses as shown in FIG. 11;
FIG. 16 is a flow chart explaining, in detail, the steps performed to register the terminal addresses as shown in FIG. 11;
FIG. 17 is a flow chart explaining the steps that follow those shown in FIG. 16;
FIG. 18A is a diagram showing the ATM address table set by the PSS in the step of registering the terminal addresses as illustrated in FIG. 16;
FIG. 18B is a diagram showing the second table set by the PSS in the step of registering the terminal addresses as illustrated in FIG. 16;
FIG. 19 is a diagram showing the first and second tables registered in the routing table in the step of registering the terminal addresses as illustrated in FIG. 17;
FIG. 20 is a diagram illustrating the paths through which information is transmitted in the signaling step shown in FIG. 11;
FIG. 21 is a flow chart explaining, in detail, the signaling step of FIG. 11;
FIG. 22 is a flow chart that follows the flow chart of FIG. 21;
FIG. 23 is a flow chart that follows the flow chart of FiG. 22;
FIG. 24 is a diagram showing the first to third tables registered in the routing table in the signaling step shown in FIG. 23;
FIG. 25 is a flow chart showing the steps performed to release the communication route which has been set in the signaling step;
FIG. 26 is a flow chart that follows the flow chart of FIG. 25;
FIG. 27 is a flow chart that follows the flow chart of FIG. 26; and
FIG. 28 is a diagram showing the first table that explains how port numbers are described in a GFC field.

### Best Mode For Carrying Out the Invention

The embodiments of the invention, or the best modes thereof, will be described, with reference to the accompanying drawings.

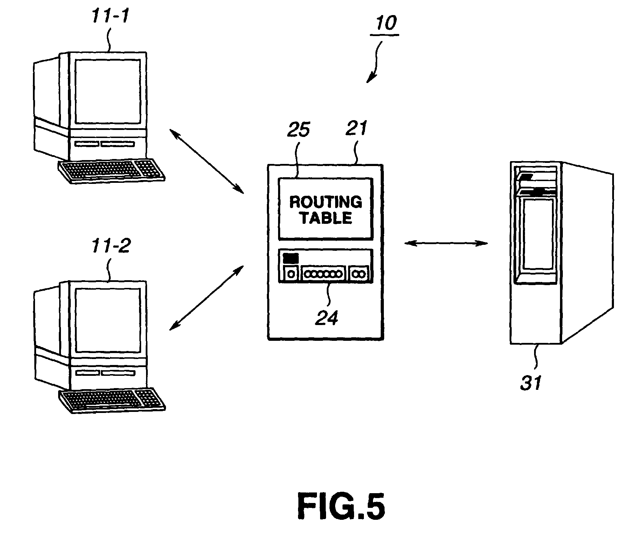

FIG. 5 is a block diagram showing the structure of an ATM network system 10 according to the present invention. This ATM network system 10 comprises a terminal 11-1, a terminal 11-2, an exchange 21, and a proxy signaling server (PSS) 31. The exchange 21 relays data between the terminals 11-1 and 11-2. The proxy signaling server 31 functions as a proxy server for the exchange 21. The ATM network system 10 uses the ATM protocol to accomplish data communication between the terminal 11-1 and the terminal 11-2. The ATM protocol is a protocol, which performs asynchronous data communication, transferring information in the same way, irrespective of the transmission speed. In the ATM protocol, data is transmitted in units of fixed lengths of information (i.e., ATM cells, each consisting of 53 bytes). Each ATM cell contains routing information in the header section, which designates the destination to which the data should be transferred. The exchange 21 refers to the routing information recorded in the header section of the ATM cell, transferring the data to the destination designated by the routing information. The terminals connected to the exchange 21 are not limited to the two terminals 11-1 and 11-2. Rather, more terminals may be connected to the exchange 21.

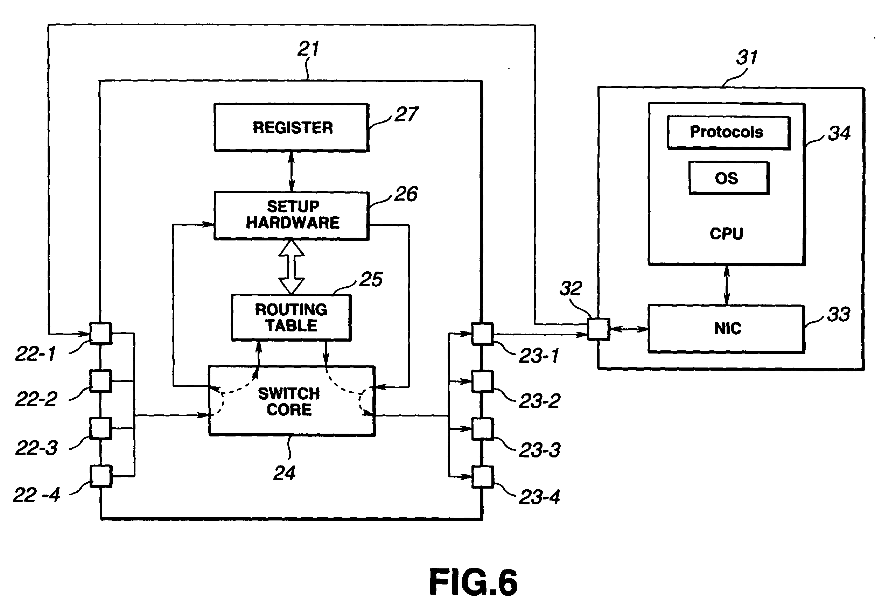

FIG. 6 illustrates the internal structures of the exchange 21 and the PSS 31.

As shown in FIG. 6, the exchange 21 provided in the ATM network system 10 comprises input ports 22-1 to 22-4, output ports 23-1 to 23-4, a switch core 24, a routing table 25, setup hardware 26, a register 27, and the like.

The exchange 21 is an apparatus for routing an ATM cell to achieve data communication between the terminals 11-1 and 11-2, in accordance with the routing information described in the cell header of the ATM cell.

In the exchange 21, the input ports 22-1 to 22-4 and the output ports 23-1 to 23-4 make pairs, each consisting of one input port and one output port. More precisely, the input port 22-1 and the output port 23-1 make a pair; the input port 22-2 and the output port 23-2 make another pair; the input port 22-3 and the output port 23-3 make still another pair; and the input port 22-4 and the output port 23-4 make the last pair. The switch core 24 changes over the port connection, connecting one of the input ports 22-1 to 22-4 to one of the output ports 23-1 to 23-4. The routing table 25 stores routes that the switch core 24 may switch, form one to another. The setup hardware 26 effects the setup operation immediately or initializes the register 27 after the power switch to the exchange 21 is closed. The register 27 holds the control flags which are required to operate the setup hardware 26.

The PSS 31 comprises, for example, a personal computer. The ATM network system 1 has central processing unit (CPU) 34 and a network interface card (NIC) 33. The CPU 34 performs various process types of processing in accordance with a predetermined operating system (OS) and a prescribed protocol. The NIC 33 effects interface processing, between the CPU 34 and a port 32 connected to the input port 22-1 and output port 23-1 of the exchange 21. The PSS 31 is an apparatus, which operates, in place of the exchange 21, to register terminal addresses and carry out the signaling, in preparation for the data communication between the terminals 11-1 and 11-2. That is, the PSS 31 sets routing information and registers this information in the routing table 25 of the exchange 21, in place of the exchange 21.

The data communication protocol applied in the ATM network system 10 will be described.

In the ATM network system 10, the data communication between the terminal 11-1 (or the terminal 11-2) is accomplished by using the so-called ATM protocol, and the data communication between the terminals 11-1 and 11-2 is achieved by using mainly two data communication protocols, i.e., transfer protocol and PSS protocol. Like the ATM protocol, the transfer protocol and the PSS protocol transfer data in units of ATM cells having a fixed length of 53 bytes, thus effecting data communication.

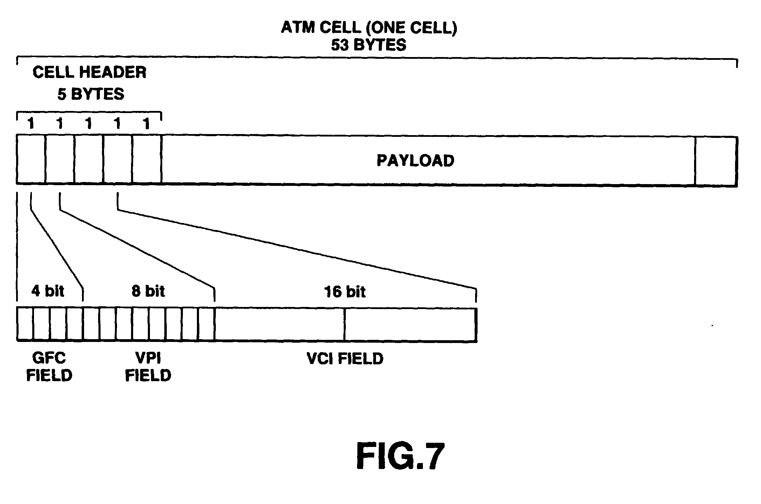

The transfer protocol is a protocol designed to transfer, from the exchange 21 to the PSS 31, the information which has been received from the terminal 11-1 or the terminal 11-2 and which will be used to register the terminal address and carry out signaling. As shown in FIG. 7, the transfer protocol serves to transmit a plurality of ATM cells, usually combined, each composed of a 5-byte cell header and a 48-byte payload (53 bytes = one cell).

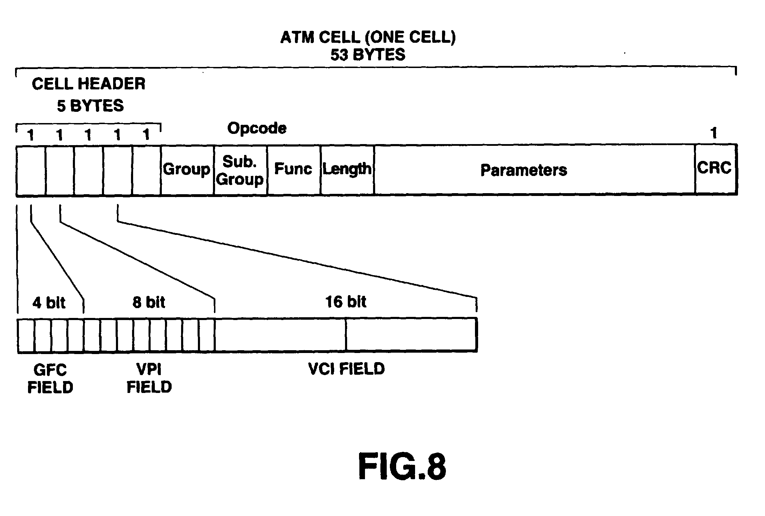

The PSS protocol is a protocol which the PSS 31 uses to request that the information registered or stored in the routing table of the exchange 21 be changed or reset, and which the exchange 21 uses to request that the PSS 31 should respond to the request for changing the information registered. The PSS protocol serves to transmit one ATM cell (53 bytes = one cell) that is composed of a 5-byte cell header, Opcodes (group, sub-group, function, and length), and a parameters, as is illustrated in FIG. 8.

As shown in FIGS. 7 and 8, the cell headers of the transfer protocol and PSS protocol have a 4-bit GFC field, an 8-bit VPI field, and a 16-bit VCI field, which are arranged in the order mentioned from the head.

The method of using the GFC field is now being studied. A virtual path identifier (VPI) is described in the VPI field. A virtual channel identifier (VCI) is described in the VCI field. The VPI and the VCI are designated to acquire transfer paths and channels to transmit data between the terminals 11-1 and 11-2 and between the exchange 21 and the PSS 31. Hereinafter, VPI and VCI will be generally called "path channel (VPI, VCI)."

ATM FORUM defines a dedicated path channel. For example, a path channel (VPI, VCI) = (0, 5) is defined for the signaling process between the terminals, and a path channel (VPI, VCI) = (0, 16) is defined for the registering of terminal addresses.

The PSS protocol defines a plurality of instructions. According to the PSS protocol, a path channel (VPI, VCI) = (0, 7) is described in the cell header in order to transmit these instructions. This path channel may have any other value.

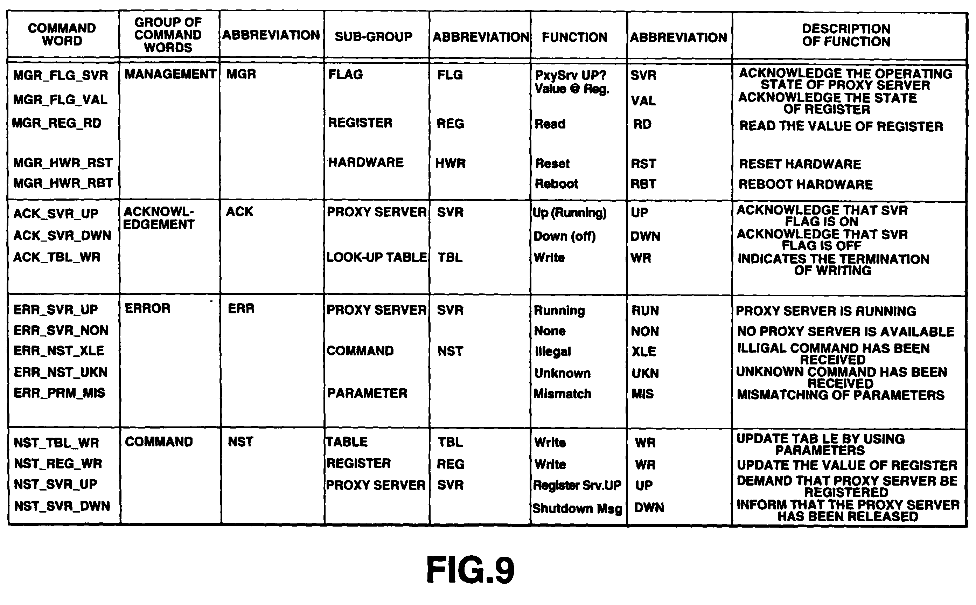

A table of the instructions actually set in the PSS protocol is shown in FIG. 9.

For example, ACK_SVR_UP is an instruction for set the SVR flag, thereby to terminate the setting process. ERR_SVR_UP is an instruction indicating that the proxy server is already operating. NST_TBL_WR is an instruction for updating the contents of the register 27. NST_SVR_UP is an instruction for requesting that the proxy server be registered.

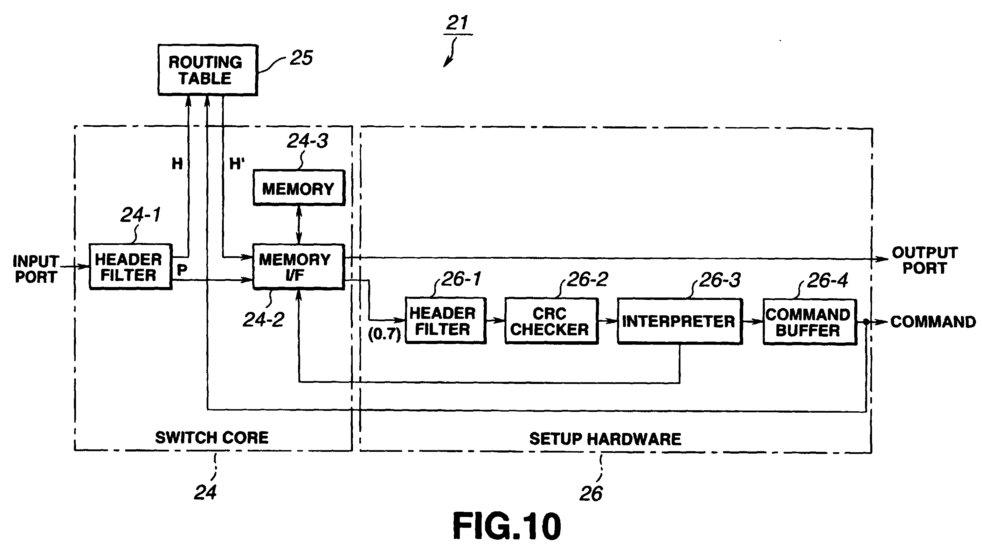

FIG. 10 illustrates the circuitry of the exchange 21 that processes the ATM cells transmitted by the use of either the transfer protocol or the PSS protocol.

The core switch 24 has, for example, a header filter 24-1, a main memory interface 24-2, and a memory 24-3. The header filter 24-1 divides the ATM cell input at the input port, into a cell header consisting of five high-order bits and a payload consisting of 48 low-order bits. The cell header is supplied to the routing table 25 and rewritten therein, if necessary, and is further supplied to the memory interface 24-2. Meanwhile, the payload is supplied to the memory interface 24-2, too, without being processed at all. The memory interface 24-2 synthesizes the cell header and the payload, which are temporarily stored in the memory 24-3. The cell header and payload are output from the memory 24-3, under the control of the memory interface 24-2. The path channel described in the cell header is supplied to the setup hardware 26 if it is (VPI, VCI) = (0, 7), that is, if the instruction is a PSS-protocol instruction. Otherwise, the path channel is supplied via the output port to the terminal 11-1, the terminal 11-2, the PSS 31 or the like.

The setup hardware 26 has a header filer 26-1, a CRC checker 26-2, an interpreter 26-3, and a command buffer 26-4. The header filter 26-1 detects the cell header in the ATM cell supplied from the memory interface 24-2. Then, the CRC checker 26-2 detects a data error, if any, in the ATM cell. If no errors are found in the ATM cell, the interpreter 26-3 executes each of the instructions shown in FIG. 9. The results of the process of executing instructions are supplied to the memory interface 24-4 or the command buffer 26-4. The command buffer 26-4 issues a command on the basis of the process of executing instructions. The command is supplied to, for example, the routing table 25 and the like, and alters the data registered in the routing table 25. The results of the process of executing instructions, which have been supplied from the interpreter 26-3 to the command buffer 26-4, are output to the output port corresponding to the input port, as the response to the apparatus connected to the input port.

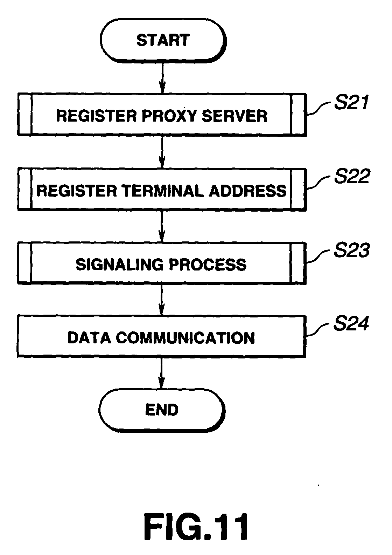

The operation of the ATM network system 10 embodying the present invention will be explained below, with reference to the flow chart of FIG. 11.

In the ATM network system 10, the exchange 21 cannot register the addresses of terminals or perform signaling. Hence, in the ATM network system 10, the PSS 31, which will function as proxy server to the exchange 21 is registered in Step 21 (registering of proxy server). In the next step S22, the addresses of the terminals 11-1 and 11-2 are registered (registering of terminal addresses). Then, in Step S23, signaling process is carried out between the terminals (i.e., the terminals 11-1 and 11-2) which will undergo data communication. In the ATM network system 10, data communication is effected in Step S24, between the terminals (i.e., the terminals 11-1 and 11-2) subjected to the signaling process.

In the process of registering the proxy server (Step S21), the exchange 21 registers, in the routing table 25, the information showing which port the PSS 31 is connected to. The exchange 21 also set the first table indicating data transfer routes extending from the ports to the proxy server, so that the addresses of the other terminals may be registered and the signaling process may be performed on the other terminals. Once the process of registering the proxy server has completed, the PSS 31 will control the exchange 21.

In the process of registering terminal addresses (Step S22), the PSS 31 sets an ATM address table showing the addresses of the terminals 11-1 and 11-2. Further, the PSS 31 sets the second table showing the data transfer routes, each extending from the proxy server to one terminal (the terminal 11-1 or the terminal 11-2), in order to accomplish the signaling process. The PSS 31 supplies the second table to the exchange 21, in which the second table is registered in the routing table 25.

In the signaling process (Step S23), the PSS 31 sets the third table showing the data transfer routes extending from the terminal 11-1 to the terminal 11-2 and from the terminal 11-2 to the terminal 11-1, in order to achieve data communication between the terminals 11-1 and the terminal 11-2. The PSS 31 informs the terminal 11-1 of the path channel to be used to transfer data from the terminal 11-2 to the terminal 11-1, and also informs the terminal 11-2 of the path channel to be used to transfer data from the terminal 11-1 to the terminal 11-2. Further, the PSS 31 supplies the third table to the exchange 21, in which the third table is registered in the routing table 25.

In the ATM network system 10, data can be transmitted between the terminals 11-1 and 11-2 after Steps S21 to S23 have been performed as described above.

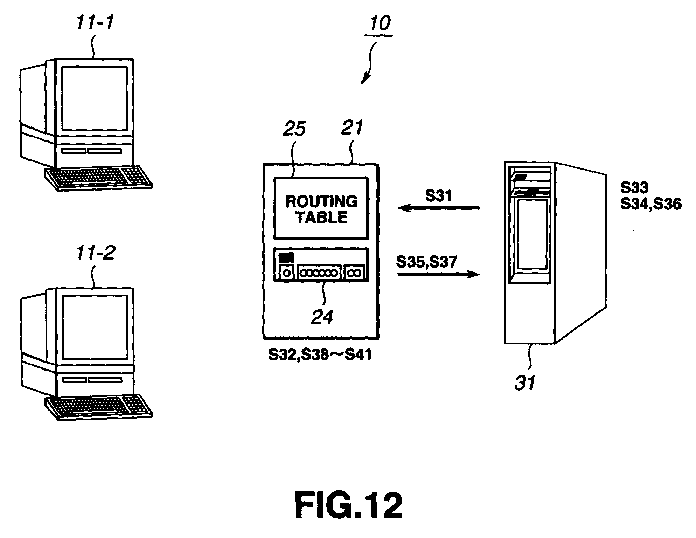

The process of registering the proxy server, performed in Step S21, and the signaling process effected in Step S23 will be described below in greater detail. First, the process (i.e., Step S22 shown in FIG. 11) of registering the PSS 31 as proxy server in the exchange 21 will be described. The process of registering the proxy server is carried out between, for example, the exchange 21 and the PSS 31, as is illustrated in FIG. 12. In the case of the network system 10, the communication between the exchange 21 and the PSS 31 is effected by the use of mainly the PSS protocol.

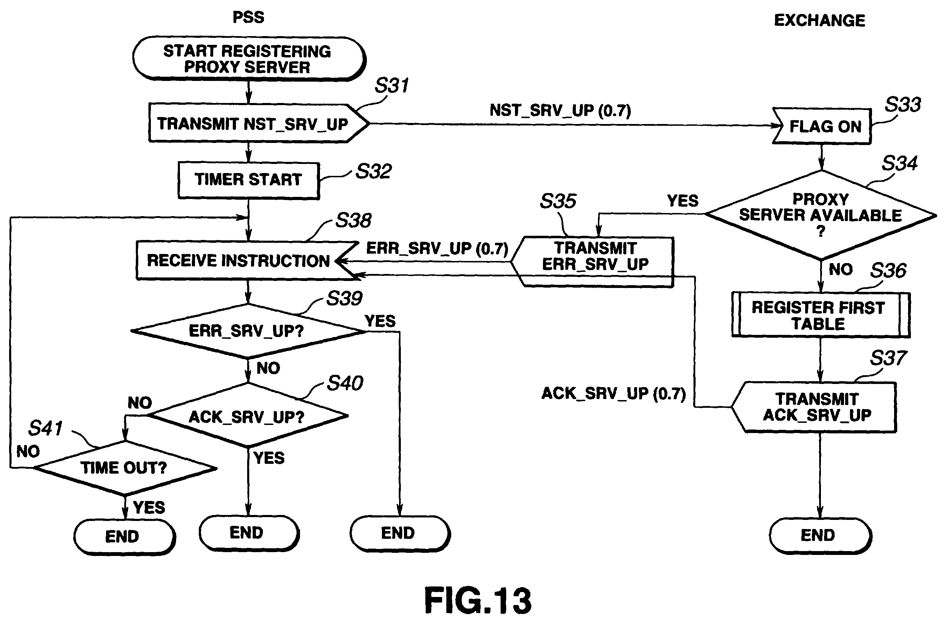

FIG. 13 is a flow chart explaining the process of registering the proxy server. With reference to the flow chart, the process will be explained in detail.

In the process of registering the proxy server, the CPU 34 of the PSS 31 transmits NST_SVR_UP to the exchange 21 by using the PSS protocol, thereby starting the process (Step S31). NST_SVR_UP is an instruction indicating that the PSS 31 requests that the exchange 21 should register the proxy server. This instruction is transferred by the PSS protocol and, therefore, through the dedicated path channel (VPI, VCI) = (0, 7), where VPI = 0 and VCI = 7. To transfer data by the use of the PSS protocol thereafter, the path channel (VPI, VCI) = (0, 7) will be used in the same way.

Next, after transmitting NST_SVR_UP in Step 32, the CPU 34 of the PSS 31 causes a timer to start (Step S32). The timer is thus started in Step 32 in order to perform a time-out process in the case where neither ACK_SRV_UP nor ERR_SRV_UP is received from the exchange 21 in a subsequent process.

Then, the setup hardware 26 of the exchange 21 receives the NST_SVR_UP transmitted from PSS 31 and set a flag on the register 27 which corresponds to the port numbers of the input port and output port to which the PSS 31 is connected (Step 33). (In the case illustrated in FIG. 6, the port numbers are those of the input port 22-1 and input port 23-1.

The setup hardware 26 of the exchange 21 then determines whether or not a flag has been set for the port number on the register 27, in addition to the flag set in Step S33. That is, the setup hardware 26 determines if a proxy server other than the PSS 31 has been already set up and connected to this exchange 21 (Step S34).

If it is determined in Step S34 that a proxy server other than the PSS 31 has been already set up and connected to the exchange 21, the setup hardware 26 of the exchange 21 transmits ERR_SRV_UP to the PSS 31 by using the PSS protocol (Step S35). Upon receipt of this instruction ERR_SRV_UP, the CPU 34 of the PSS 31 can determine that a proxy server has been already set up and registered in the exchange 21. In other words, only one proxy server 31 can be registered in the exchange 21. If it is determined in Step S34 that no proxy server other than the PSS 31 is connected, the operation goes to Step S36.

Thereafter, the setup hardware 26 of the exchange 21 registers the numbers of the ports to which the PSS 31 is connected. The hardware 26 of the exchange 21 also sets the first table indicating the route extending from each port to the proxy server, so that the terminal addresses may be registered later and the signaling process may be carried out later, and registers the first table in the routing table 25 (Step S36).

The first table, thus registered in the routing table 25 in Step 36, is described such that the path channel (VPI, VCI) described in the cell header of the ATM cell corresponds to the input and output ports. In the first table, the path channel for the ATM cell to be input to each port and the path channel for the ATM cell to be transferred to the PSS 31 are described as different path channels.

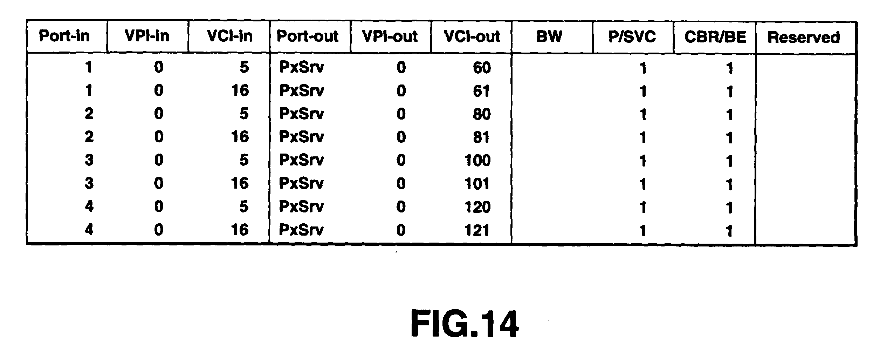

For instance, such a table as shown in FIG. 14 is registered as the first table in the routing table 25. In FIG. 14, PxSrv is the number of a port to which PSS 31 is connected.

Hence, the exchange 21 alters the path channel as will be explained below, in order to transfer the data input to each port to the PSS 31 by using the first table.

For example, if an ATM cell describing, in its header, the path channel (VPI, VCI) = (0, 5) for achieving the signaling process is input to the port 1, the path channel for the ATM cell will be changed to (VPI, VCI) = (0, 60) and then transferred to the PSS 31. If an ATM cell describing, in its header, the path channel (VPI, VCI) = (0, 16) for achieving the signaling process is input to the port 1, the path channel for this ATM cell will be changed to (VPI, VCI) = (0, 61) and then transferred to the PSS 31.

If an ATM cell describing, in its header, the path channel (VPI, VCI) = (0, 5) for achieving the signaling process is input to the port 2, the path channel for the ATM cell will be changed to (VPI, VCI) = (0, 80) and then transferred to the PSS 31. If an ATM cell describing, in its header, the path channel (VPI, VCI) = (0, 16) for achieving the signaling process is input to the port 2, the path channel for the ATM cell will be changed to (VPI, VCI) = (0, 81) and then transferred to the PSS 31.

Further, if an ATM cell describing, in its header, the path channel (VPI, VCI) = (0, 5) for achieving the signaling process is input to the port 3, the path channel for the ATM cell will be changed to (VPI, VCI) = (0, 100) and then transferred to the PSS 31. If an ATM cell describing, in its header, the path channel (VPI, VCI) = (0, 16) for achieving the signaling process is input to the port 3, the path channel for the ATM cell will be changed to (VPI, VCI) = (0, 101) and then transferred to the PSS 31.

Still further, if an ATM cell describing, in its header, the path channel (VPI, VCI) = (0, 5) for achieving the signaling process is input to the port 4, the path channel for the ATM cell will be changed to (VPI, VCI) = (0, 120) and then transferred to the PSS 31. If an ATM cell describing, in its header, the path channel (VPI, VCI) = (0, 16) for achieving the signaling process is input to the port 4, the path channel for the ATM cell will be changed to (VPI, VCI) = (0, 121) and then transferred to the PSS 31.

Thus, upon receipt of an ATM cell describing a path channel in its header, the PSS 31 can determine that either the signaling process or the address-registering process will be effected through that path channel and also that which port of the exchange 21 the ATM cell has been input to.

In the first table, the bandwidth (BW) of the ATM cell, a permanent virtual channel/switched virtual channel (PVC/SVC) and a constant bit rate/best effort (CRB/BE) are registered, along with the path channel. The bandwidth, PVC/SVC and CBR/BE are registered, together with the path channel, also in the second and third tables, which will be described later.

The PSS 31 is registered, as a proxy server, in the exchange 21 when the first table is registered in the routing table 25 in Step S36.

Thereafter, the setup hardware 26 of the exchange 21 transmits an instruction ACK_SRV_UP to the PSS 31 by using the PSS protocol (Step S37). ACK_SRV_UP is the instruction indicating that the proxy server has been registered.

Next, the CPU 34 of the PSS 31 receives ERR_RSV_UP or ACK_SRV_UP, transmitted from the exchange 21 (Step S38).

Then, the CPU 34 of the PSS 31 determines whether ERR_SRV_UP from the exchange 21 has been received or not (Step S39). The CPU 34 of the PSS 31 terminates the process if it receives ERR_SRV_UP in Step 39, that is, if it has not been registered as a proxy server.

If the CPU 34 of the PSS 31 determines in Step S39 that ERR_SRV_UP from the exchange 21 has not been received, it determines whether or not it has received ACK_SRV_UP from the exchange 21 (Step S40). If the CPU 34 has received the instruction ACK_SRV_UP in Step S40, that is, if it is registered as a proxy server, it will function as a proxy server, performing various processes to control the exchanger 21.

If the CPU 34 determines in Step S40 that it has not received the instruction ACK_SRV_UP, it will acknowledge the timer that has started in Step 32 and will determine whether the timer has performed the time-out process or not (Step S41). If the CPU 34 determines in Step S41 that the time-out process has not been effected, the operation returns to Step S38, whereby Steps 38 to 41 are repeated. If the CPU 34 determines in Step S41 that the time-out process has been effected, it informs the PSS 31 that the time-out process has been effected, and it terminates the operation.

The proxy server is registered in Steps S31 to S41 as described above. In the ATM network system 10, the exchange 21 can therefore register, in the register 27, the numbers of the ports to which the PSS 31 is connected, and can register the PSS 31 as a proxy server also in the register 27. Moreover, in the ATM network system 10, the exchange 21 can register, in the routing table 25, the first table that is used to effect the registering of the terminal addresses and the signaling process. Hence, the exchange 21 can achieve the routing in subsequent Steps S22 and S23, i.e., the transfer of data to the PSS 31 to register the terminal addresses transmitted from the terminals 11-1 and 11-2 and accomplish the signaling process.

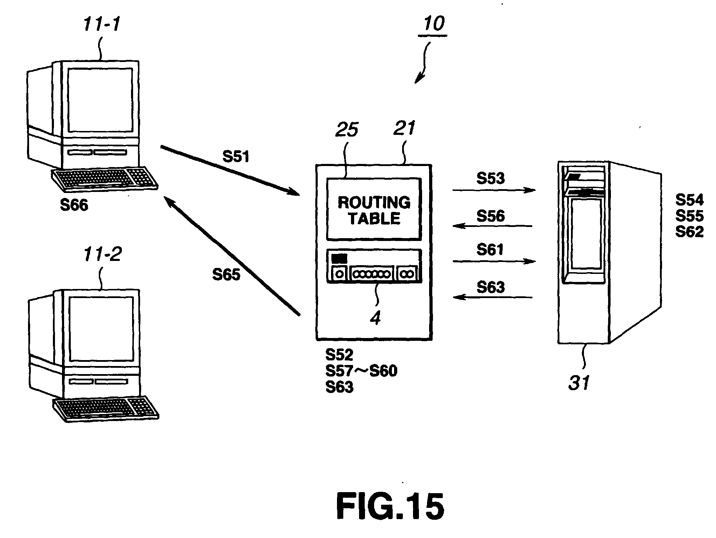

The process of registering the terminal addresses (i.e., the process effected in Step S22 shown in FIG. 11), including the step of registering in the exchange 21 the path channel to accomplish communication between the terminals 11-1 and 11-2, will be explained. The process of registering the terminal addresses is performed between the terminal 11-1, the exchange 21 and the PSS 31 as shown in FIG. 15, in order to register, for example, the address of the terminal 11-1. In the process of registering the terminal addresses, the second table is registered to register the address of the terminal 11-1 and transfer an ATM cell from the PSS 31 to the terminal 11-1. The second table is registered by using the first table provided for routing data to the PSS 31 from each port of the exchange 21 that has been registered in the routing table 25 in the process of registering the proxy server. To register the address of the terminal 11-2, a process is performed between the terminal 11-2, the exchange 21 and the PSS 31. This process is similar to the process effected for the terminal 11-1. Therefore, mainly the process of registering the address of the terminal 11-1 will be described below.

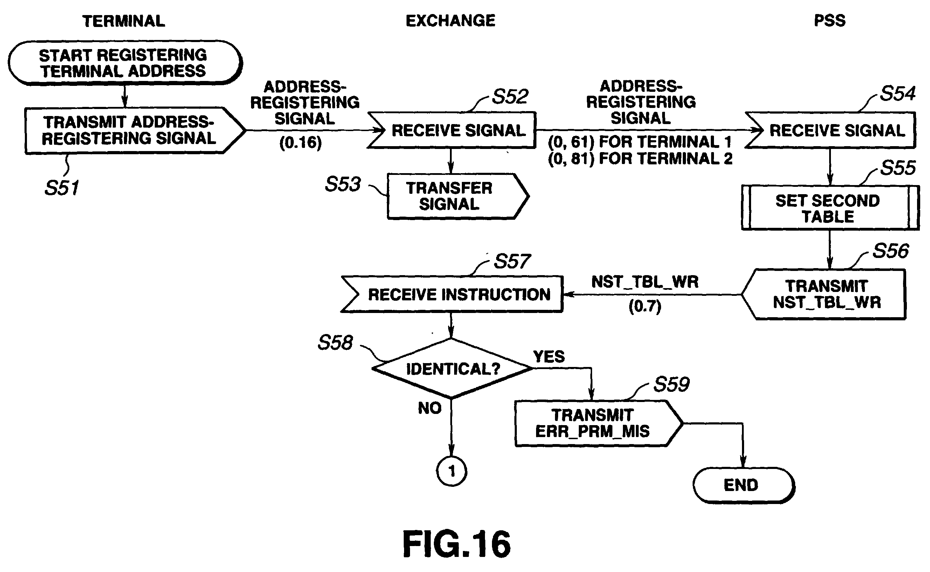

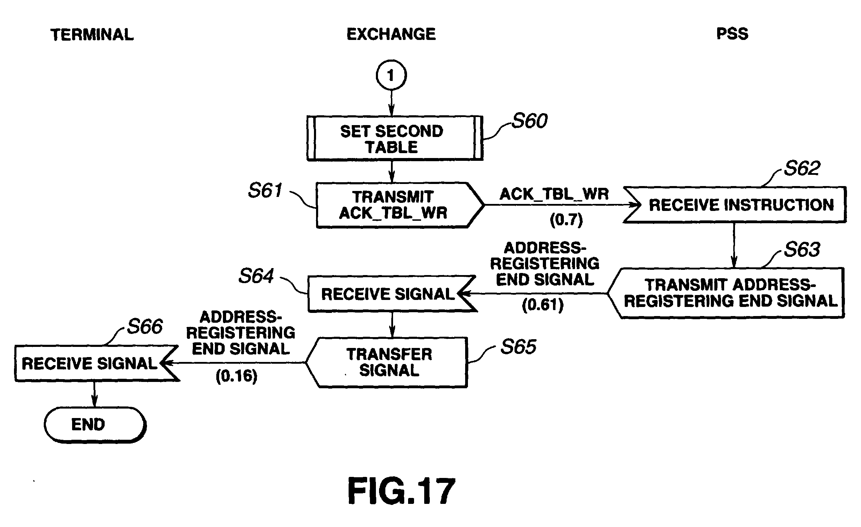

FIGS. 16 and 17 show a flow chart of the process of registering the address of the terminal 11-1. With reference to this flow chart, the process will be explained in detail.

The process of registering the terminal address is initiated when the terminal 11-1 transmits an address-registering signal to the exchange 21 (Step S51). The address-registering signal is a signal based on ILMI of ATM FORUM. ATM FORUM designates the path channel (VPI, VCI) = (0, 16) as path channel for registering the addresses of terminals. Described in this address-registering signal is the ATM address indicating the terminal 11-1. The ATM address is a 20-byte address consisting of a network address and a terminal address.

Next, the switch core 24 of the exchange 21 receives the address-registering signal transmitted from the terminal 11-1 (Step S52).

The switch core 24 of the exchange 21 then acknowledges the contents of the routing table 25 and changes the path channel described in the header of the ATM cell of the address-registering signal (Step S53). That is, the switch core 24 changes the path channel, by referring to the first table (the table shown in FIG. 14) set in the routing table 25 in the process of registering the proxy server. At this time, the switch core 24 does not change the information other than the path channel, which is contained in the address-registering signal. If the address-registering is one transmitted from, for example, the terminal 11-1, it changes the path channel (VPI, VCI) = (0, 16) to a path channel (VPI, VCI) = (0, 61). If the address-registering is one transmitted from the terminal 11-2, it changes the path channel (VPI, VCI) = (0, 16) to a path channel (VPI, VCI) = (0, 81).

In Step S53, the switch core 24 of the exchange 21 transfers the address-registering signal, which has changed the path channel, to the PSS 31 by the use of the PSS protocol.

Next, the PSS 31 receives the address-registering signal transmitted from the exchange 21 (Step S54).

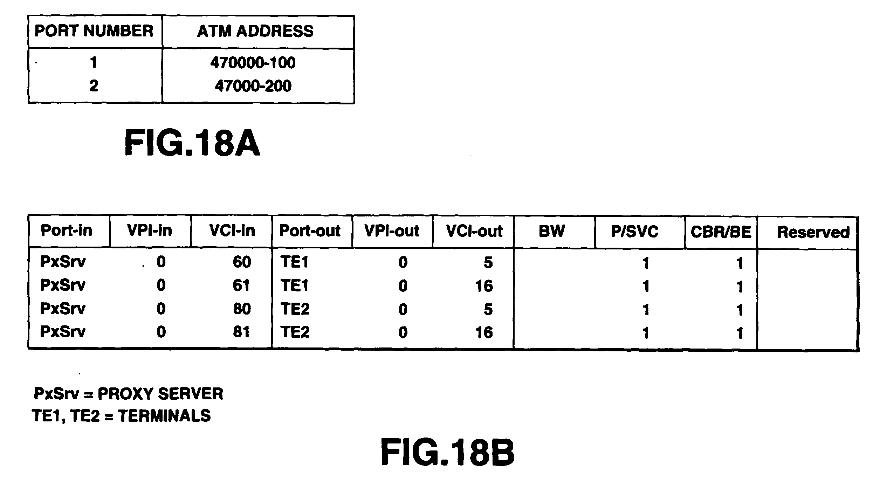

Then, the CPU 34 of the PSS 31 sets an ATM table which shows ATM addresses in correspondence with the numbers of the input and output ports of the exchange 21 as shown in FIG. 18A, on the basis of the address-registering signal transmitted from the exchange 21. The CPU 34 of the PSS 31 also sets the second table showing the route extending from the PSS 31 to the terminal 11-1 (Step S55).

The second table will be used to effect the signaling process and the address-registering process. In the second table set in Step S55, the path channel for the ATM cell transmitted from the PSS 31 and the path channel for the ATM cell to be transferred to the terminal 11-1 are described as different path channels.

Such a table as shown in FIG. 18B, for example, is registered as the second table. (FIG. 18 shows the table for the terminal 11-2, too.)

Therefore, the exchange 21 will change path channels as described below, in order to transfer the data output from the PSS 31 to either the terminal 11-1 or the terminal 11-2.

If the PSS 31 outputs the ATM cell of the path channel (VPI, VCI) = (0, 60), for example, the ATM cell of the path channel (VPI, VCI) = (0, 5) will be transferred to the terminal 11-1 to effect signaling. If the PSS 31 outputs the ATM cell of the path channel (VPI, VCI) = (0, 61), the ATM cell of the path channel (VPI, VCI) = (0, 16) will be transferred to the terminal 11-1 to register the address. If the PSS 31 outputs the ATM cell of the path channel (VPI, VCI) = (0, 80), for example, the ATM cell of the path channel (VPI, VCI) = (0, 5) will be transferred to the terminal 11-2 to effect signaling. If the ATM cell of the path channel (VPI, VCI) = (0, 81) is input from the PSS 31, the ATM cell of the path channel (VPI, VCI) = (0, 16) will be transferred to the terminal 11-2 to register the address. That is, the second table describes the relation inverse to the relation between the ports of the exchange 21 and the PSS 31, which is shown in the above-mentioned first table.

The CPU 34 of the PSS 31 transmits NST_TBL_WR to the exchange 21 by using the PSS protocol (Step S56). NST_TBL_WR is an instruction which requests that exchange 21 should update the contents of the routing table 25. This signal includes the second table, which is one of the items set in Step S55.

Next, the setup hardware 26 of the exchange 21 receives the instruction NST TBL_WR(Step S57).

Next, the setup hardware 26 of the exchange 21 determines whether or not the path channel (VPI, VCI) of the terminal 11-1 has been registered in the routing table 25, from the information of the second table contained in the instruction NST_TBL WR (Step S58). If an identical channel (VPI, VCI) has been registered, the setup hardware 26 will transmit ERR_PR_MIS to the PSS 31 by the use of the PSS protocol. The instruction ERR_PR_MIS indicates an error, because two identical channels (VPI, VCI) should be registered if the path channel of the terminal 11-1 were registered. Then, the setup hardware 26 terminates the operation (Step S59).

If it is determined in S58 that an identical channel (VPI, VCI) has not been registered, the setup hardware 26 of the exchange 21 registers the second table in the routing table 25 (Step S60).

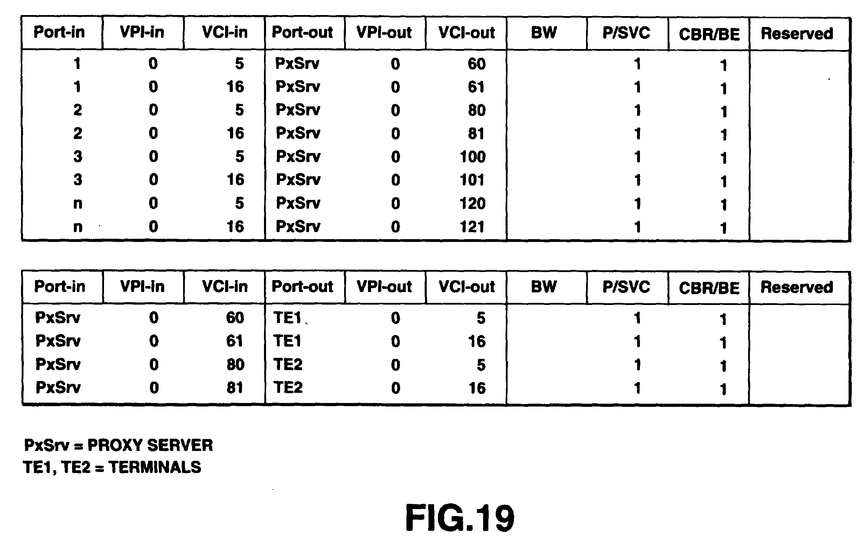

Thus, the contents registered here are those contained in the NST_TBL_WR the PSS 31 has transmitted to the exchange 21 in Step S55. The upper half of FIG. 19 is the first table already registered at the time of registering the proxy server, while the lower half of FIG. 19 is the second table registered in Step S60.

Thereafter, the setup hardware 26 of the exchange 21 transmits an instruction ACK_TBL_WR to the PSS 31 by the use of the PSS protocol (Step S61). This instruction indicates that the terminal 11-1 has been registered.

Next, the CPU 34 of the PSS 31 receives ACK_TBL_WR transmitted from the exchange 21 (Step S62).

The CPU 34 of the PSS 31 then transmits a signal indicating the completion of the address registering, to the exchange 21 by the use of the PSS protocol (Step S63). At this time, the PSS 31 refers to the second table (FIG. 18B) set, thus describing the path channel (VPI, VCI) = (0, 61) in the header of the ATM cell and transmitting this path channel to transfer data to the terminal 11-1.

Nest, the switch core 24 of the exchange 21 receives the signal indicating the completion of the address registering of the transmission protocol from the PSS 31(Step S64).

Next, the switch core 24 of the exchange 21 refers to the second table registered in the routing table 25, changing the path channel (VPI, VCI) = (0, 61) for the signal, which indicates the completion of the address registering, to the path channel (VPI, VCI) = (0, 16) for the terminal 11-1. The switch core 24 transmits this path channel to the terminal 11-1 (Step S65).

The terminal 11-1 receives the signal indicating the completion of the address registering, from the exchange 21 (Step S66). Therefore, the terminal 11-1 can determine that it has been registered in the exchange 21.

Similar processes are performed in the terminal 11-2. The terminal 11-2 is thereby registered in the exchange 21, too.

As described above, the ATM addresses of the terminals 11-1 and 11-2 can be registered in the PSS 31 in the ATM network system 10, by conducting the process of registering terminal addresses, or Steps S51 to S66. Further, the second table that serves to route the ATM cell from the PSS 31 to the terminals 11-1 and 11-2 to perform the signaling process and the address-registering process can be registered in the routing table 25.

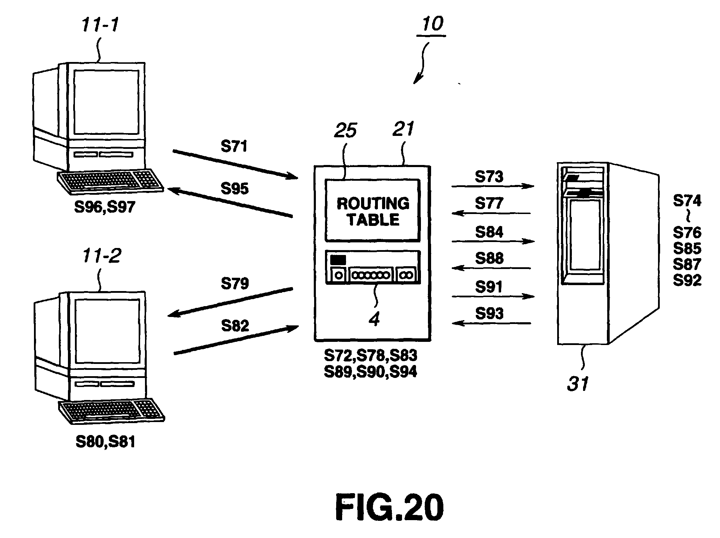

The signaling process between the terminal 11-1 and the terminal 11-2 (i.e., Step S23 shown in FIG. 11) will now be explained. The signaling process is effected between, for example, the terminal 11-1, the terminal 11-2, the exchange 21 and the PSS 31 as is illustrated in FIG. 20. In the signaling process, the third table for transferring the ATM cell from the terminal 11-1 to the terminal 11-2 and from the terminal 11-2 to the terminal 11-1 is registered in the routing table 25, by utilizing the first and second tables that have been registered in the routing table 25 in the process of registering the proxy server and the process of registering the terminal addresses. It will be explained how the signaling process is performed when the terminal 11-1 makes a request for signaling. Nonetheless, the signaling process is performed in the same way when the terminal 11-2 makes a request for signaling.

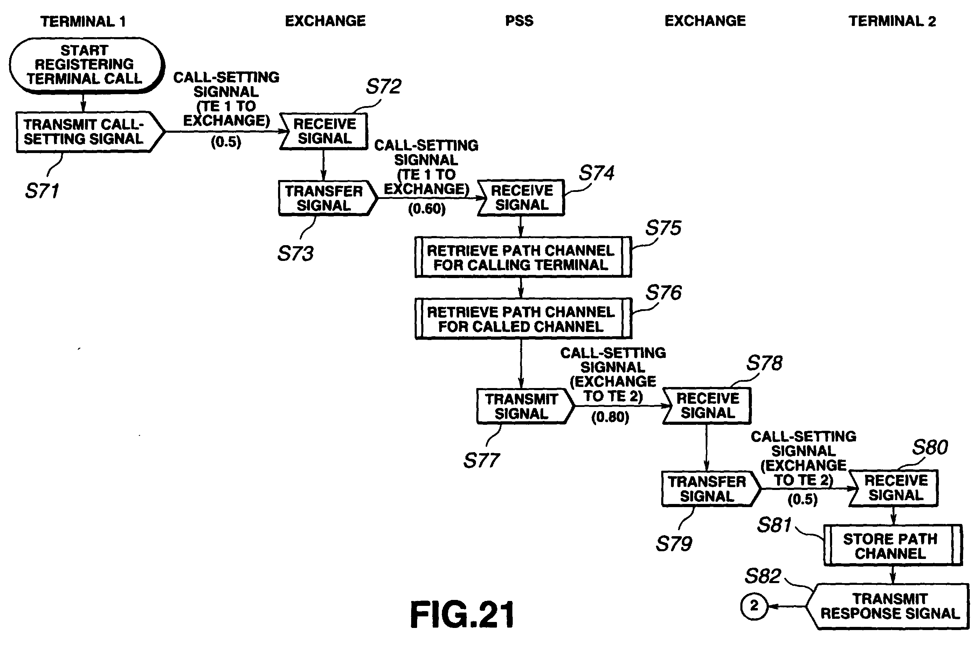

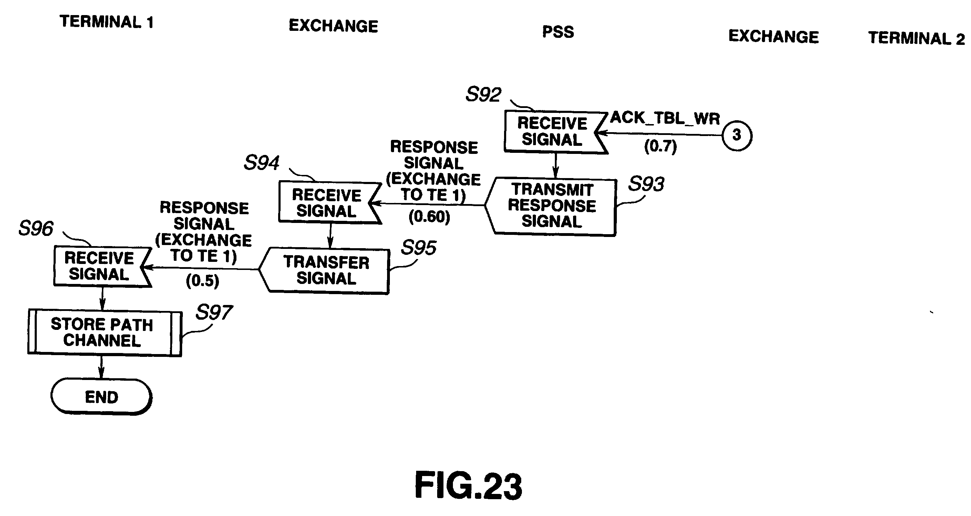

FIGS. 21, 22 and 23 show a flow chart of the signaling process. The process will be described in detail, with reference to FIGS. 21, 22 and 23.

The signaling process starts when the terminal 11-2 transmits a call-setting signal to the exchange 21 so that the terminals 11-1 and the terminal 11-2 may be connected to each other (Step S71). The call-setting signal contains a called number (i.e., the ATM address of the terminal 11-2) designating the called terminal and a calling number (i.e., the ATM address of the terminal 11-1) designating the calling terminal. The path channel (VPI, VCI) = (0, 5) must be used as the path channel for the call-setting signal, as is designated by ATM FORUM.

Next, the switch core 24 of the exchange 21 receives the call-setting signal transmitted from the terminal 11-1 (Step S72).

The switch core 24 of the exchange 21 then refers to the first table registered in the routing table 25, changing the path channel described in the cell header of the call-setting signal. More specifically, the switch core 24 changes the path channel (VPI, VCI) = (0, 5) to a path channel (VPI, VCI) = (0, 60). The switch core 24 changes no data other than the path channel. The switch core 24 transfers the call-setting signal, in which the path channel has been changed, to the PSS 31 by the use of the transfer protocol (Step S73).

The CPU 34 of the PSS 31 receives the call-setting signal transmitted from the exchange 21 (Step S74).

The CPU 34 of the PSS 31 then acknowledges the calling number (i.e., the ATM address of the terminal 11-1), which is contained in the call-setting signal received, and retrieves a path channel that the terminal 11-1 will use to transmit data to the terminal 11-2. For example, the CPU 34 retrieves the path channel (VPI, VCI) = (0, 111) as a path channel that the terminal 11-1 will use to transmit data to the terminal 11-2 (Step S75).

Next, the CPU 34 of the PSS 31 acknowledges the called number (i.e., the ATM address of the terminal 11-2), which is contained in the call-setting signal received, and retrieves a path channel that the terminal 11-2 will use to transmit data to the terminal 11-1. For example, the CPU 34 retrieves the path channel (VPI, VCI) = (0, 123) as a path channel that the terminal 11-2 will use to transmit data to the terminal 11-1 (Step S76).

Further, the CPU 34 of the PSS 31 inserts the path channel (VPI, VCI) = (0, 123) retrieved in Step S76, which the terminal 11-2 will use to transmit data to the terminal 11-1, into the call-setting signal that contains the called number (ATM address of the terminal 11-2) and the calling number (ATM address of the terminal 11-1). The CPU 34 then transmits the call-setting signal to the exchange 21 by the use of the transfer protocol (Step S77). A this time, the CPU 34 refers to the second table, thereby transmitting the path channel described in the cell header of the call-setting signal, as path channel (VPI, VCI) = (0, 80), so that the exchange 21 may transfer this call-setting signal to the terminal 11-2.

Next, the switch core 24 of the exchange 21 receives the call-setting signal transmitted from the PSS 31 (Step S78).

The switch core 24 of the exchange 21 then refers to the second table registered in the routing table 25, thereby changing the path channel described in the sell header of the call-setting signal. More precisely, the switch core 24 changes the path channel (VPI, VCI) = (0, 80) to a path channel (VPI, VCI) = (0, 5). The switch core 24 then transfers, to the terminal 11-2, the call-setting signal containing the path channel thus changed (Step S79).

Then, the terminal 11-2 receives the call-setting signal transmitted from the exchange 21 (Step S80).

The terminal 11-2 then stores the path channel which is contained in the call-setting signal received and which the terminal 11-2 will use to transmit data to the terminal 11-1 (Step S81). That is, the terminal 11-2 stores the path channel (VPI, VCI) = (0, 123).

Further, the terminal 11-2 transmits a response signal to the exchange 21 (Step S82). The response signal indicates that the terminal 11-2 can be connected to the terminal 11-1. The channel described in this response signal is (VPI, VCI) = (0, 5).

Next, the exchange 21 receives the response signal transmitted from the terminal 11-2 (Step S83).

The switch core 34 of the exchange 21 refers to the first table registered in the routing table 25, changing the path channel described in the cell header of the response signal transmitted. To be more specific, the switch core 24 changes the path channel (VPI, VCI) = (0, 5) to the path channel (VPI, VCI) = (0, 80). The switch core 24 then transfers the response signal, in which the path channel has been changed, to the PSS 31 by the use of the transfer protocol (Step S84).

The CPU 34 of the PSS 31 receives the response signal transmitted from the exchange 21 (Step S85).

The that the CPU 34 of the PSS 31 then stores the path channel retrieved in Step S75, i.e., the path channel the terminal 11-1 will use to transmit data to the terminal 11-2. The CPU 34 also stores the path channel retrieved in Step S76, which the terminal 11-2 will use to transmit data to the terminal 11-1, and sets the third table that will be used to transfer data between the terminal 11-1 and the terminal 11-2 (Step S87).

The CPU 34 of the PSS 31 transmits NST_TBL_WR to the exchange 21 by using the PSS protocol (Step S88). NST_TBL_WR is an instruction showing that the PSS 31 requests that the exchange 21 should update the tables registered in the routing table 25. This instruction NST_TBL_WR contains the contents of the third table set in Step S87.

Thereafter, the setup hardware 26 of the exchange 21 receives the instruction NST_TBL_WR transmitted from the PSS 31 (Step S89).

The setup hardware 26 of the exchange 21 then registers the third table contained in NST_TBL_WR, in the routing table 25 (Step S90).

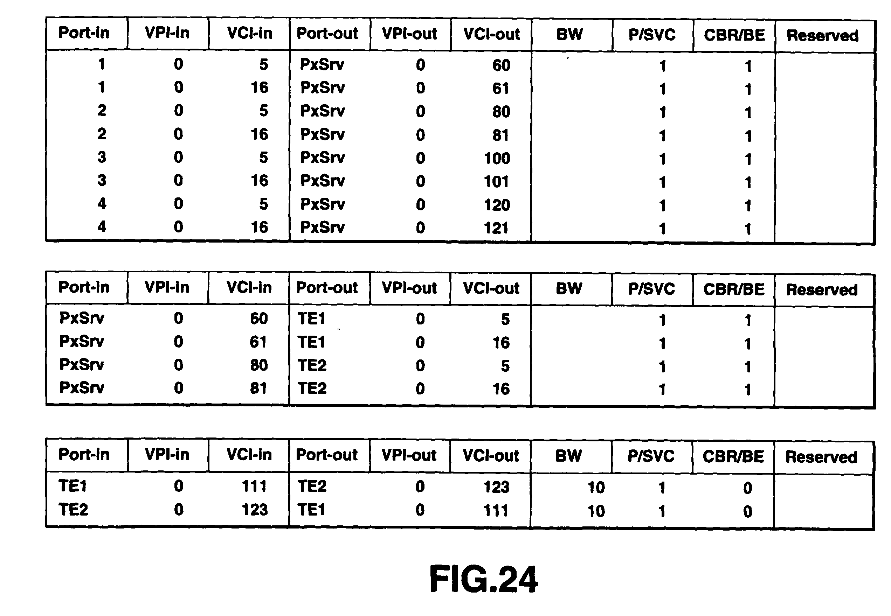

FIG. 24 shows the contents of the tables registered in the routing table 25. The upper part of the figure is the first table registered when the proxy server is registered. The middle part thereof is the second table registered when the addresses of the terminals are registered. The lower part thereof is the third table registered in Step S90. As FIG. 24 shows, the third table shows the route along which data will be transferred from the terminal 11-1 to the terminal 11-2 and the route along which data will be transferred from the terminal 11-2 to the terminal 11-1.

Next, the setup hardware 26 of the exchange 21 transmits ACK_TBL_WR to the PSS 31 by the use of the PSS protocol (Step S91). ACK_TBL_WR indicates that the registering has been completed.

The CPU 34 of the PSS 31 receives ACK_TBL_WR transmitted from the exchange 21 (Step S92).

The CPU 34 of the PSS 31 then determines that a data transfer route has been provided between the terminal 11-1 and the terminal 11-2. The CPU 34 transmits the response signal to the exchange 21 by the use of the transfer protocol, the response signal containing the path channel (VPI, VCI) = (0, 111) retrieved in Step S75, which the terminal 11-1 will use to transmit data to the terminal 11-2 (Step S93). At this time, the CPU 34 refers to the second table, transmitting the path channel described in the cell header of the response signal. This path channel is transmitted as (VPI, VCI) = (0, 60), so that the response signal may be transferred to the terminal 11-1.

Next, the switch core 24 of the exchange 21 receives the response signal transmitted from the PSS 31 (Step S94).

The switch core 24 then refers to the second table registered in the routing table 25, thereby changing the path channel described in the cell header of the response signal transmitted. More specifically, the setup hardware 26 changes the path channel (VPI, VCI) = (0, 60) to the path channel (VPI, VCI) = (0, 5), and the switch core 24 transfers the response signal, which contains the path channel thus changed, to the terminal 11-1 (Step S95).

The terminal 11-1 receives the response signal transmitted from the exchange 21 (Step S96).

The terminal 11-1 then stores the path channel (VPI, VCI) contained in the response signal received, which the terminal 11-1 will use to transmit data to the terminal 11-2 (Step S97). That is, the terminal 11-1 stores the path channel (VPI, VCI) = (0, 111) (Step S97).

In the ATM network system 10, the signaling process is performed in Steps 71 to S97 as described above. The third table that is used to transfer data from the terminal 11-1 to the terminal 11-2 (or from the terminal 11-2 to the terminal 11-1) can therefore be registered in the routing table 25. In addition, the terminal 11-1 can inform the terminal 11-2 of the path address that it will use to transmit data to the terminal 11-2, and the terminal 11-2 can inform the terminal 11-1 of the path address that it will use to transmit data to the terminal 11-1.

In the ATM network system 10, the process of registering the proxy server (Step S21), the process of registering the terminal addresses (Step S22), and the signaling process (Step S23) are effected as described above. The third table showing the route between the terminals 11-1 and 11-2 can thereby be registered in the routing table 25 of the exchange 21.

Hence, in the ATM network system 10, the exchange 21 can achieve routing between the terminals 11-1 and 11-2 when the following data communication process (Step S24) is carried out. The communication between the terminal 11-1 and the terminal 11-2 is thereby accomplished.

In the ATM network system 10, the communication thus accomplished between the terminal 11-1 and the terminal 11-2 can be released. How the communication is released will be explained below.

Like the signaling process, the communication-releasing process is effected between the terminal 11-1, the terminal 11-2, the exchange 21 and the PSS 31. In the communication-releasing process, the third table registered in the signaling process is deleted. How this process is performed when the terminal 11-1 makes a demand for releasing the communication will be explained below. Nonetheless, the process will be effected in the same way when the demand is made by the terminal 11-2.

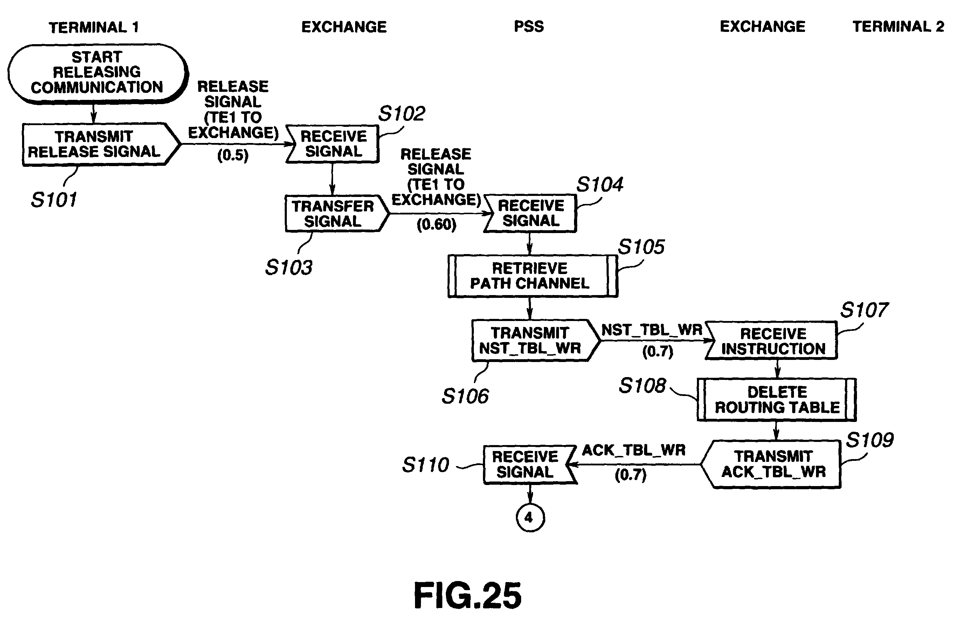

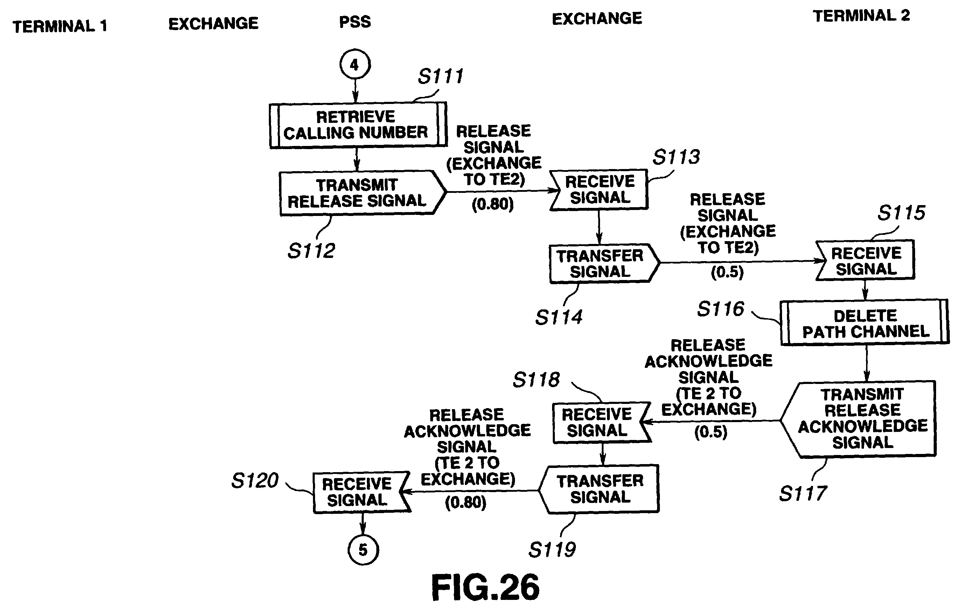

FIGS. 25, 26 and 27 is a flow chart of the communication-releasing process. With reference to this flow chart, the process will be described in detail.

The communication-releasing process is started when the terminal 11-1 transmits a release signal to the exchange 21, in order to be disconnected from the terminal 11-2 (Step S101). The release signal contains a calling number that designates the called terminal and the calling terminal. The calling number is sequentially incremented in the order the third table, for example, has been prepared. The calling number can therefore specify the route between the called terminal and the calling terminal. The path channel (VPI, VCI) = (0, 5) must be used as the path channel for the release signal, as is designated by ATM FORUM.

Next, the switch core 24 of the exchange 21 receives the release signal transmitted from the terminal 11-1 (Step S102).

The switch core 24 of the exchange 21 then refers to the first table registered in the routing table 25 and changes the path channel described in the cell header of the release signal transmitted. More precisely, the setup hardware 26 changes the path channel (VPI, VCI) = (0, 5) to the path channel (VPI, VCI) = (0, 60). At this time, the switch core 24 changes no data other than the path channel. The switch core 24 transfers the release signal, in which the path channel has been changed, to the PSS 31 by the use of the transfer protocol (Step S103).

The CPU 34 of the PSS 31 receives the release signal transmitted from the exchange 21 (Step S104).

The CPU 34 of the PSS 31 then acknowledges the calling number contained in the release signal received, and retrieves a path channel that the terminal 11-1 will use to transmit data to the terminal 11-2 (Step S105).

The CPU 34 of the PSS 31 further transmits NST_TBL_WR to the exchange 21 by the use of the PSS protocol (Step S106). NST_TBL_WR is an instruction indicating that the PSS 31 requests that exchange 21 should update the tables registered in the routing table 25. This instruction NST_TBL_WR contains the path channel retrieved in Step S105.

The setup hardware 26 of the exchange 21 receives NST_TBL_WR transmitted from the PSS 31 (Step S107).

The setup hardware 26 of the exchange 21 then deletes the third table from the routing table 25, because the third table is designated by the path channel contained in the instruction NST_TBL_WR (Step S108). The setup hardware 26 of the exchange 21 deletes both the table that the terminal 11-2 will use to transmit data to the terminal 11-1 and the table that the terminal 11-1 uses to transmit data to the terminal 11-2. The setup hardware 26 of the exchange 21 then transmits ACK_TBL_WR, which indicates that the deletion has completed, to the PSS 31 by using the PSS protocol (Step S109).

Next, the CPU 34 of the PSS 31 receives ACK_TBL_WR transmitted from the exchange 21 (Step S110).

The CPU 34 of the PSS 31 then retrieves the calling number from the path channel that has been retrieved in Step S105 (Step S111).

The CPU 34 of the PSS 31 also transmits a release signal, which contains the calling number retrieved in Step S111, to the exchange 21 by the use of the transfer protocol (Step S112). At this time, the CPU 34 refers to the second table and transmits the path channel (VPI, VCI) = (0, 80) described in the cell header of the release signal so that the exchange 21 may transfer the release signal to the terminal 11-2.

Next the switch core 24 of the exchange 21 receives the release signal transmitted from the PSS 31 (Step S113).

The switch core 24 of the exchange 21 refers to the second table registered in the routing table 25, changing the path channel described in the cell header of the release signal transmitted. To be specific, the setup hardware 26 changes the path channel (VPI, VCI) = (0, 80) to the path channel (VPI, VCI) = (0, 5). The switch core 24 transfers the release signal, which contains the path channel thus changed, to the terminal 11-2 (Step S114).

Then, the terminal 11-2 receives the release signal transmitted from the exchange 21 (Step S115).

The terminal 11-2, which is designated by the calling number contained in the release signal, deletes the path channel it uses to transmit data to the terminal 11-1 (Step S116). That is, the terminal 11-2 deletes the path channel (VPI, VCI) = (0, 123).

The terminal 11-2 then transmits, to the exchange 21, a release-acknowledge signal that indicates that the terminal 11-1 has been disconnected from the terminal 11-2 (Step S117). The path channel described in the release-acknowledge signal is (VPI, VCI) = (0, 5).

Next, the exchange 21 receives the lease-acknowledge signal transmitted from the terminal 11-2 (Step S118).

The switch core 24 of the exchange 21 refers to the first table registered in the routing table 25, changing the path channel described in the cell header of the release-acknowledge signal transmitted. More specifically, the switch core 24 changes the path channel (VPI, VCI) = (0, 5) to the path channel (VPI, VCI) = (0, 80). The switch core 24 then transfers the release-acknowledge signal, which contains the path channel thus changed, to the PSS 31 by the use of the transfer protocol (Step S119).

Next, the CPU 34 of the PSS 31 receives the release-acknowledge signal transmitted from the exchange 21 (Step S120).

The CPU 34 of the PSS 31 then determines that the terminals 11-1 and the terminal 11-2 have been disconnected from each other and transmits the release-acknowledge signal to the exchange 21 by using the transfer protocol (Step S121). At this time, the CPU 34 refers to the second table, transmitting the path channel (VPI, VCI) = (0, 60) described in the cell header of the release-acknowledge signal, so that the release-acknowledge signal may be transferred to the terminal 11-1.

The CPU 34 of the PSS 31 also acknowledges the calling number contained in the release-acknowledge signal it has received. The CPU 34 then deletes the path channel that the terminal 11-1 will use to transmit data to the terminal 11-2 and also the path channel that the terminal 11-2 will use to transmit data to the terminal 11-1 (Step S122).

Thereafter, the switch core 24 of the exchange 21 receives the release-acknowledge signal transmitted from the PSS 31 (Step S123).

The switch core 24 of the exchange 21 refers to the second table registered in the routing table 25, changing the path channel described in the cell header of the release-acknowledge signal transmitted. More specifically, the switch core 24 changes the path channel (VPI, VCI) = (0, 60) to the path channel (VPI, VCI) = (0, 5). The switch core 24 transfers the release-acknowledge signal, which contains the path channel thus changed, to the terminal 11-1 (Step S124).

Next, the terminal 11-1 receives the release-acknowledge signal transmitted from the exchange 21 (Step S125).

The terminal 11-1 then deletes the path channel that it will use to transmit data to the terminal 11-2 (Step S126). That is, the terminal 11-1 deletes the path channel (VPI, VCI) = (0, 111).

As described above, the third table for transferring data from the terminal 11-1 to the terminal 1102 (or from the terminal 11-2 to the terminal 11-1) can be deleted from the routing table 25 in the ATM network system 10, by carrying out the release process shown in Steps S101 to S126. Further, the terminal 11-1 can delete the path address used to transfer data from the terminal 11-1 to the terminal 11-2 and also the path address used to transfer data from the terminal 12-1 to the terminal 11-1.

In the ATM networks system, which is the best mode for carrying out this invention, the above-mentioned processes are performed, whereby the PSS 31 conducts the signaling process in place of the exchange 21. Hence, the exchange 21 need not have a high-performance CPU. This helps to reduce the price of the exchange 21 and to render the exchange 21 smaller.

The best mode for carrying out the invention, described above, is a system that utilizes ATM communication. Nevertheless, the present invention can be applied by means of signaling using IP (Internet Protocol), merely by altering the software for the PSS 31, without changing the hardware configuration.

In this ATM network system 10, the data communication between the exchange 21 and the PSS 31 is accomplished by the use of mainly two data communication protocols, i.e., the transfer protocol and the PSS protocol. In the transfer protocol and the PSS protocol, the path channel (VPI, VCI) described in the cell header is changed and used to effect the routing of the ATM cell. The method of transferring data is not limited to this method, however.

For instance, the GFC field described at the head of the cell header of the ATM cell may be utilized instead.

That is, the port number of the port receiving the ATM cell input to the exchange 21 may be described in, for example, the GFC field of the ATM cell. Then, it is possible to designate the terminal that has transmitted the ATM cell.

This may be actually used and applied to the ATM network system 10 as will be described below.

Upon receipt of an address-registering signal, the exchange 21 describes the port number in the GFC field, thereby transmitting the ATM cell. The PSS 31 receives the address-registering signal containing the port number described in the GFC field and determines from which terminal the ATM cell has been transmitted. The PSS 31 can therefore register the address of the terminal that has transmitted the address-registering signal. The PSS 31 can also set the above-mentioned second table to transmit the data back to that terminal.

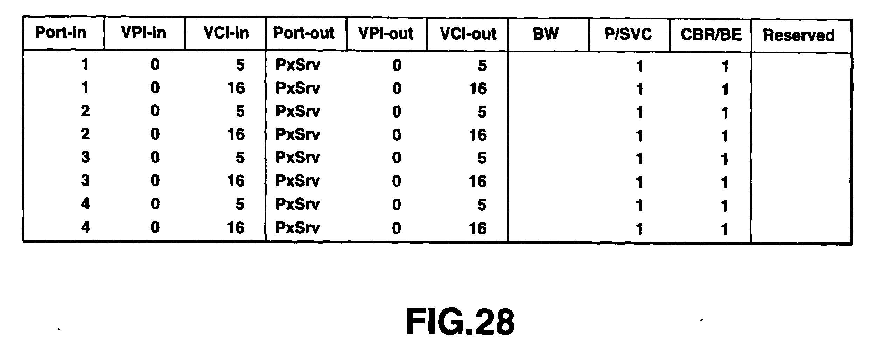

Thus, in this case, it is unnecessary to change the path channels for the input and output sides (i.e., the port and the PSS 31) in the first table shown in FIG. 14, as is illustrated in FIG. 28.

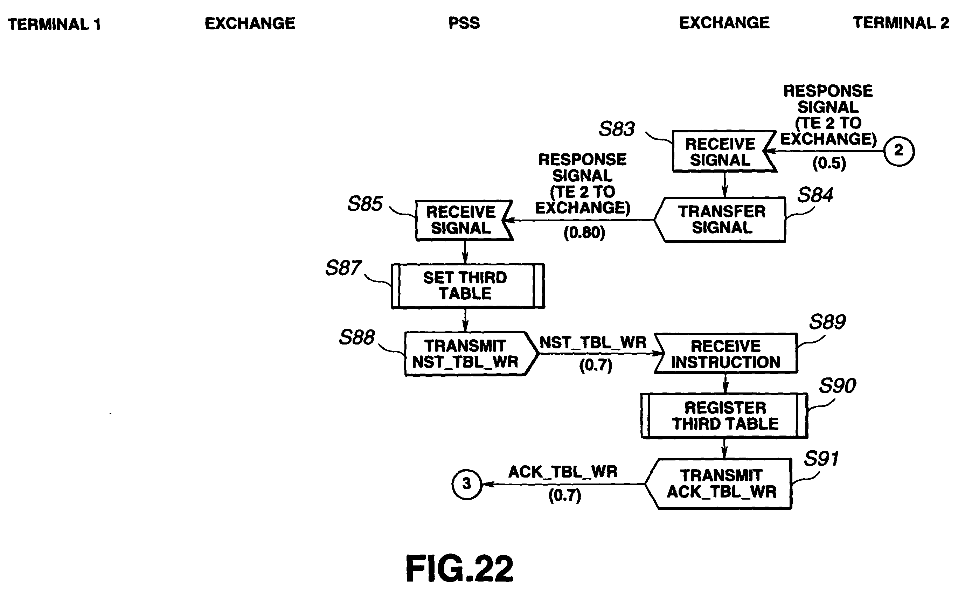

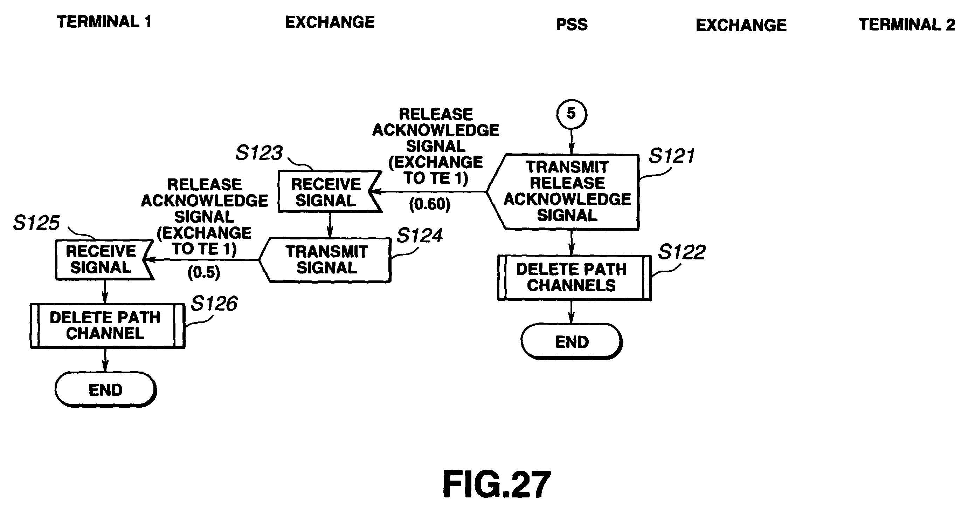

Further, the exchange 21 changes the port number described in the GFC field, not changing the path channel with reference to the first table and ATM address table, in the processes performed by using the transfer protocol, such as Step S53 shown in FIG. 16, Step S73 shown in FIG. 21, Step S81 shown in FIG. 22, Step S103 shown in FIG. 25 and Step S119 shown in FIG. 27.

## Claims

1. A communication system comprising a switch apparatus and a software-processing apparatus, wherein data communication is performed between a plurality of information-processing apparatuses through the switch apparatus and the software-processing apparatus and the switch apparatus are connected to each other, characterized in that
said switch apparatus comprises:
a plurality of input ports for inputting communication data from an external apparatus;
a plurality of output ports for outputting the communication data to an external apparatus;
storage means for storing route information representing an input/output route for the communication data;
switching means for switching the input/output route in accordance with the route information stored in said storage means, thereby to output the communication data input from one of said plurality of input port, from one of said plurality of output ports; and
setting means for setting the input/output route switched by said switching means for the communication data, by registering the software-processing apparatus connected to one of said plurality of input ports and one of said plurality of output ports, as a proxy software-processing apparatus, and by updating the route information stored in the storage means, in accordance with instruction information supplied from the software-processing apparatus registered, and
said software-processing apparatus comprises:
an input/output port connected to one of said plurality of input ports and one of said plurality of output ports, all provided in said switch apparatus; and
control means for controlling said switch apparatus, by outputting, in place of said switch apparatus, instruction information to the switch apparatus through the input/output port, said instruction information being one for setting the input/output route in said switch apparatus to perform communication between said plurality of information-processing apparatuses connected to said switch apparatus, through said switch apparatus.

2. A communication system according to claim 1, characterized in that said switching means switches said input/output route in accordance with the route information set by said setting means, thereby to transmit the communication data between one of said plurality of information-processing apparatuses and another of said plurality of information-processing apparatuses.

3. A communication system according to claim 1, characterized in that said software-processing apparatus comprises only one unit connected to said switch apparatus.

4. A communication system according to claim 1, characterized in that said control means of the software-processing apparatus outputs the instruction information containing a prescribed address identifier, to said switch apparatus through the input/output port, and the instruction information is input to one of said plurality of input ports of the switch apparatus.

5. A communication system according to claim 4, characterized in that the instruction information is input to said switching means, and said switching means outputs the instruction information to the setting means in accordance with the address identifier contained in the instruction information.

6. A communication system according to claim 1, characterized in that said control means of the software-processing apparatus allocates an address identifier to an external information-processing apparatus connected to one of said plurality of input ports and one of said plurality of output ports, all provided in said switch apparatus, and transmits the address identifier, as the instruction information, to said switch apparatus through said input/output port, and said setting means of the switch apparatus stores the address identifier, as the route information, into said storage means, said address identifier being one for transmitting the communication data between the external information-processing apparatus and the software-processing apparatus through said switch apparatus.

7. A communication system according to claim 1, characterized in that said control means of the software-processing apparatus allocates an address identifier to a first information-processing apparatus connected to one of said plurality of input ports and one of said plurality of output ports, both provided in the switch apparatus, and a second information-processing apparatus connected to another of said plurality of input ports and another of said plurality of output ports, both provided in the switch apparatus, and transmits the address identifier, as the instruction information, to said switch apparatus through said input/output port, and said setting means stores the address identifier, as the route information, into said storage means.

8. A communication system according to claim 1, characterized in that said control means of the software-processing apparatus outputs instruction information to said switch apparatus through said input/output port, said instruction information being one indicating that the input/output route should be released, and said setting means of the switch apparatus deletes the input/output route from said storage means in accordance with the instruction information.

9. An communication system according to claim 1, characterized in that said switching means of the switch apparatus sets a port number designating said input port, in a header part of the communication data, before outputting the communication data input to said input port, to said software-processing apparatus, in accordance with the route information.

10. A switch apparatus characterized by comprising:
a plurality of input ports for inputting communication data from an external apparatus;
a plurality of output ports for outputting the communication data to an external apparatus;
storage means for storing route information representing an input/output route for the communication data;
switching means for switching the input/output route in accordance with the route information stored in said storage means, thereby to output the communication data input from one of said plurality of input port, from one of said plurality of output ports; and
setting means for setting the input/output route switched by said switching means for the communication data, by registering the software-processing apparatus connected to one of said plurality of input ports and one of said plurality of output ports, as a proxy software-processing apparatus, and by updating the route information stored in the storage means, in accordance with instruction information supplied from the software-processing apparatus registered, and

11. A switch apparatus according to claim 10, characterized in that said proxy software-processing apparatus comprises only one unit.

12. A switch apparatus according to claim 10, characterized in that said external software-processing apparatus allocates a first address identifier for transmitting the communication data to and receiving the communication data from an external information-processing apparatus connected by said switch apparatus to one of said plurality of input ports and one of said plurality of output ports, and transmits the first address identifier, as the instruction information, to said switch apparatus, and said setting means stores the first address identifier, as the route information, into said storage means, said first address identifier being one for transmitting the communication data between the external information-processing apparatus and the external software-processing apparatus through said switch apparatus.

13. A switch apparatus according to claim 10, characterized in that said external software-processing apparatus allocates a second address identifier for transmitting the communication data, through said switch apparatus, between a first external information-processing apparatus connected to one of said plurality of input ports and one of said plurality of output ports and a second external information-processing apparatus connected to another of said plurality of input ports and another of said plurality of output ports, and transmits the second address identifier, as the instruction information, to said switch apparatus, and said setting means stores the second address identifier, as the route information, into said storage means, said second address identifier being one for transmitting the communication data between the first external information-processing apparatus and the second external information-processing apparatus through said switch apparatus.

14. A switch apparatus according to claim 10, characterized in that the instruction information is input by said external software-processing apparatus in accordance with a specific address identifier, from a port to which said external software-processing apparatus is connected.

15. A switch apparatus according to claim 14, characterized in that the address identifier is composed of a virtual path identifier and a virtual channel identifier.

16. A switch apparatus according to claim 10, characterized in that said setting means deletes the input/output route from said storage means in accordance with the instruction information supplied from the external software-processing apparatus.

17. A switch apparatus according to claim 10, characterized in that said input ports input ATM cell data as the communication data.

18. A switch apparatus according to claim 10, characterized in that said output ports output AM cell data as the communication data.

19. A switch apparatus according to claim 10, characterized in that said switching means sets information representing a port number designating said input port, in a header part of the communication data input to said input port, before outputting the communication data to said software-processing apparatus, in accordance with the route information.

20. A software-processing apparatus characterized by comprising:
an input/output port for inputting and outputting communication data to and from an external switch apparatus which comprises storage means for storing an input/output route and is connected to a plurality of information-processing apparatuses, for performing communication between said plurality of information-processing apparatuses in accordance with the input/output route; and
control means for controlling said switch apparatus, by outputting, in place of said switch apparatus, instruction information to the switch apparatus through the input/output port, said instruction information being one for setting the input/output route in said switch apparatus to perform communication between said plurality of information-processing apparatuses connected to said external switch apparatus, through said external switch apparatus.

21. A software-processing apparatus according to claim 20, characterized in that said control means allocates, in place of the external switch apparatus, an address identifier to an external information-processing apparatus connected to the external switch apparatus, and outputs the address identifier, as the instruction information, to said switch apparatus through said input/output port.

22. A software-processing apparatus according to claim 20, characterized in that said control means allocates, in place of the external switch apparatus, an address identifier for achieving communication between a first external information-processing apparatus connected to said external switch apparatus and a second external information-processing apparatus connected to said external switch apparatus, and outputs the address identifier, as the instruction information, to said switch apparatus through said input/output port.

23. A software-processing apparatus according to claim 20, characterized in that said control means outputs, in place of the external switch apparatus, instruction information for releasing the input/output route, to the external switch apparatus through said input/output port.

24. A software-processing apparatus according to claim 20, characterized in that said input/output port inputs and outputs ATM cell data as the communication data.

25. A software-processing apparatus according to claim 20, characterized in that said control means outputs, in place of said external switch apparatus, instruction information to said external switch apparatus through said input/output port in accordance with a port number of an input port through which the communication data has input to said external switch apparatus, said instruction information being one for setting the input/output route of said external switch apparatus, which is used to achieve, through said external switch apparatus, communication between said plurality of information-processing apparatuses connected to said external switch apparatus.

26. A communication method for use in a system comprising a switch apparatus having a plurality of input/output ports, a plurality of information-processing apparatuses connected to said plurality of input/output ports of the switch apparatus, and a software-processing apparatus connected one of said plurality of input/output ports, characterized by comprising the steps of:
registering said software-processing apparatus, as a proxy software-processing apparatus, in said switch apparatus; and
setting first route information in said switch apparatus by means of said software-processing apparatus, said first route information is one for achieving communication between each of said information-processing apparatuses and said software-processing apparatus, through said switch apparatus.

27. A communication method according to claim 26, characterized by further comprising a step of setting second route information in said switch apparatus by means of said software-processing apparatus, said second route information is one for achieving communication between said plurality of information-processing apparatuses.

28. A communication method according to claim 27, characterized by further comprising a step of transmitting communication data between said plurality of information-processing apparatuses through said switch apparatus.

29. A communication method according to claim 27, characterized by further comprising a step of deleting the second route information for achieving the communication between said plurality of information-processing apparatuses, from said switch apparatus by means of said software-processing apparatus.

30. A communication method according to claim 26, characterized in that said software-processing apparatus uses a specific address identifier to set the first route information in said step of setting the first route information.

31. A communication method according to claim 30, characterized in that the address identifier is composed of a virtual path identifier and a virtual channel identifier.

32. A communication method according to claim 27, characterized in that said software-processing apparatus uses a specific address identifier to set the second route information in said step of setting the second route information.

33. A communication method according to claim 32, characterized in that the address identifier is composed of a virtual path identifier and a virtual channel identifier.

34. A communication method according to claim 26, characterized in that said input/output port inputs and outputs ATM cell data.

35. A communication method according to claim 26, characterized in that said switch apparatus sets a port number of said input port in communication data input to said input port, before outputting the communication data to said software-processing apparatus.
